# EUROPEAN PATENT APPLICATION

(11) **EP 1 357 517 A1**
(43) Date of publication of application: **29.10.2003**
(21) Application number: 02710410.8
(22) Date of filing: 30.01.2002
(51) Int. Cl.: G06T 13/00, G06F 13/00

(54) **ANIMATION DATA CREATING METHOD, ANIMATION DATA CREATING DEVICE, TERMINAL DEVICE, COMPUTER-READABLE RECORDING MEDIUM RECORDING ANIMATION DATA CREATING PROGRAM AND ANIMATION DATA CREATING PROGRAM**

(30) Priority: 02.02.2001 JP 2001026279; 30.05.2001 JP 2001161722
(71) Applicant: Sharp Kabushiki Kaisha, Osaka-shi, Osaka 545-8522 (JP)
(72) Inventor: HIRATA, Masafumi, Tenri-shi, Nara 632-0004 (JP); SHIBAO, Tadahide, Takaishi-shi, Osaka 592-0003 (JP); MIKATA, Junko, Soraku-gun, Kyoto 619-0216 (JP); MINAKUCHI, Mitsuru, Soraku-gun, Kyoto 619-0241 (JP); NITTA, Soichi, Kashihara-shi, Nara 634-0803 (JP)
(74) Representative: Müller - Hoffmann & Partner
(86) International application number: JP0200735
(87) International publication number: WO02065399

(57) **Abstract**

An animation data producing method of producing second animation data by replacing specific element data of first animation data with different data, includes the steps of extracting element data included in the different data and a tag for determining the element data, replacing the specific element data included in the first animation data with the element data corresponding to the extracted tag matching with the tag for determining the element data, and producing the second animation data.

## Description

### Technical Field

The present invention relates to an animation producing method of producing new animation data by replacing a part of animation data with external data, an animation data producing program, a computer-readable record medium bearing the animation data producing program, and an animation data producing device.

### Background Art

In accordance with widespread use of computer network systems in recent years, such cases have been increasing that cellular phones or other portable terminals are connected via wireless communication to the Internet for utilizing various kinds of services. As a kind of such service, there is a so-called "chat system". According to the chat system, information transmission in one-to-one relationship, which is performed in an electronic mail system, is not performed, is performed. In the chat system, therefore, when a certain user writes a message, all the users of this chat system can browse this message. This results in such an advantage that multiple users can enjoy a chat or conversation in real time among them.

For allowing more enjoyable and friendly chats in the chat system, it may be envisaged to display images (animation) on a display screen of a cellular phone by successively displaying a plurality of images of a character (e.g., a cartoon character) or the like in time sequence in addition to textual information representing contents of chats among users. However, this causes following problems.

First, for displaying animation on the chat system, it is necessary to produce data (animation data) forming the animation. For producing the animation data, however, it is necessary in the prior art to use software dedicated to production of the animation data, and such software requires extremely complicated operations. For example, even when it is required to perform a simple editing operation only by replacing a certain portion of a model of animation data, a user must be skilled in operation of the software dedicated to the animation data production.

In the case where a user uses a chat system via a portable terminal such as a cellular phone, it is impossible to display a large amount of text information or animation at one time because a display screen of the cellular phone is small in size. For browsing many messages, therefore, the user must perform scrolling or the like to update the information displayed on the screen, which impairs operability.

### Disclosure of the Invention

A major object of the invention is to provide an animation data producing method and an animation data producing device, which allow easy production of animation data by a user without using software dedicated to production of the animation data.

Another object of the invention is to provide an animation data producing method and an animation data producing device, which can effectively uses a small display screen for displaying contents of messages in a chat system.

Still another object of the invention is to provide a computer-readable record medium bearing a program, which allows easy production of animation data by a user without using software dedicated to production of the animation data, as well as the computer program itself.

Yet another object of the invention is to provide a computer-readable record medium bearing a program for producing animation data, which can be displayed by effectively using a small display screen for displaying contents of messages in a chat system, as well as the computer program itself.

In summary, the invention provides an animation data producing method of processing a portion of first animation data with different data to produce second animation data, including the steps of: extracting element data included in the different data; determining a key frame to be processed among a plurality of key frames included in the first animation data; and processing a portion of the determined key frame based on the element data to produce the second animation data.

Preferably, in the step of determining the key frame to be processed among the plurality of key frames included in the first animation data, the key frame to be processed is determined based on the extracted data.

Preferably, the animation data producing method according to the invention further includes the step of receiving external data as the different data, and the element data and each of the key frames of the first animation data include tags for determining processing portions, respectively. When a match occurs between the tags, real data corresponding to the tag of the key frame of the first animation data is processed with real data corresponding to the tag of the element data to produce the second animation data.

According to a major advantage of the invention, therefore, it is possible to produce the animation data according to contents of the element data of the external data only by providing the external data to be used for the processing, and software dedicated to the production of the animation data is not required.

Preferably, the animation data producing method according to the invention further includes the step of registering the received external data in time sequence, and the plurality of key frames included in the first animation data are successively processed based on the external data registered in time sequence to produce the second animation data.

According to another advantage of the invention, therefore, the element data of the external data registered in time sequence can be processed corresponding to the element data the respective key frames of the first animation data. Accordingly, when message contents are received as the external data, the message contents can be successively displayed on the key frames of the animation data.

Alternatively preferably, the animation data producing method according to the invention further includes the step of analyzing a method of processing the element data based on a kind of the element data, and the second animation data is produced based on the processing method.

Preferably, the animation data producing method according to the invention includes the step of selecting the second animation data from a plurality of preregistered animation data based on a result of meaning analysis of the message contents included in the element data.

According to another aspect of the invention, an animation data producing method for use in a chat system producing second animation data based on first animation data and external data sent from one or a plurality of terminal devices, and displaying the produced second animation data on the terminal device, includes the steps of receiving the external data including data for determining a processing portion of the first animation data and data representing message contents; determining a key frame to be processed among a plurality of key frames included in the first animation data based on the data for determining the processing portion; producing the second animation data by processing a portion of the determined key frame with the data representing the message contents; and displaying the second animation data including the message contents on the terminal device.

According to still another advantage of the invention, therefore, the animation can be displayed on the chat system without using software dedicated to production of the animation data. Accordingly, a user is required to perform only a simple operation of providing the external data including the data for determining the processing portion of the animation data forming a model data as well as the data representing the message contents, and thereby can achieve the chat system utilizing animation. When the number of messages increases in the chat system, it may be impossible to display the contents of such messages on the screen. Even in this case, the message contents in the chat system are updated and displayed successively and automatically without a user's operation such as scrolling. Therefore, the user's operations can be simple.

Preferably, the animation data producing method according to the invention further includes the steps of storing the external data together with time information upon every reception of the external data; and extracting the stored external data corresponding to a time range when the external data includes data specifying the time range. New animation is produced based on the extracted external data.

According to another advantage, the method of the above aspect allows the user to extract and browse only messages entered at a predetermined time, which improves user's convenience.

Preferably, according to the animation data producing method of the invention, the external data includes data determining a place, and the method further includes the steps of storing the external data upon every reception of the external data, and extracting the stored external data corresponding to the place when the external data includes the data specifying the place. New animation is produced based on the extracted external data.

According to further another advantage, the invention allows extraction and browsing of only the messages produced in a predetermined place so that comments can be exchanged only within a specific area or region, which promotes formation of communities.

Preferably, according to the animation data producing method of the invention, the external data includes data for specifying a speaker, and the method further includes the steps of: storing the external data upon every reception of the external data; and extracting the stored external data corresponding to the speaker when the external data includes the data specifying the speaker. New animation is produced based on the extracted external data.

As further another advantage, the invention allows browsing of only a history of the messages of a specific user, which improves user's convenience.

Preferably, according to the animation data producing method of the invention, the external data includes data for determining a kind of the first animation data, and the data for determining the kind of the first animation data is managed independently of the data representing the contents of the message.

According to further another advantage of the invention, even when users select different models of animation, respectively, a common message can be provided to all the users joining the chat system. Further, the system can provide the different kinds of animation to the users, respectively.

According to yet another aspect of the invention, an animation data producing method for use in a chat system producing second animation data based on first animation data and internal data sent from one or a plurality of terminal devices, and displaying the produced second animation data on the terminal device, includes the steps of sending the external data including data for determining a processing portion of the first animation data and data representing message contents; and determining a key frame to be processed among a plurality of key frames included in the first animation data based on the data for determining the processing portion, processing a portion of the determined key frame with the data representing the message contents, and displaying the second animation data including the message contents produced by the above processing.

According to further another aspect of the invention, an animation data producing device for producing second animation data by processing a portion of first animation data with different data, includes a unit extracting element data included in the different data; a unit determining a key frame to be processed among a plurality of key frames included in the first animation data based on the extracted element data; and a unit producing the second animation data by processing a portion of the determined key frame based on the element data.

According to a further another aspect of the invention, an animation data producing device for use in a system for producing second animation data based on first animation data and internal data sent from one or a plurality of terminal devices, and displaying the produced second animation data on the terminal device, includes a unit receiving the external data including data for determining a processing portion of the first animation and data representing message contents; a unit determining a key frame to be processed among a plurality of key frames included in the first animation data based on the data for determining the processing portion; a unit producing the second animation data by processing a portion of the determined key frame with the data representing the message contents; and a unit displaying the second animation data including the message contents on the terminal device.

According to further another aspect of the invention, a terminal device for use in a system for producing second animation data based on first animation data and external data sent from one or a plurality of terminal devices, and displaying the produced second animation data on the terminal device, includes a unit sending the external data including data for determining a processing portion of the first animation data and data representing message contents; and a unit determining a key frame to be processed among a plurality of key frames included in the first animation data based on the data for determining the processing portion, processing a portion of the determined key frame with the data representing the message contents, and displaying the second animation data including the message contents produced by the above processing.

According to further another aspect of the invention, a terminal device for use in a system for producing second animation data based on first animation data and external data sent from one or a plurality of terminal devices, and displaying the produced second animation data on the terminal device, includes a unit sending the external data including data for determining a processing portion of the first animation data and data representing message contents; a unit determining a key frame to be processed among a plurality of key frames included in the first animation data based on the data for determining the processing portion, and receiving data representing a processing portion of the determined key frame and data representing a manner of processing the processing portion; a unit producing second animation data based on said received data representing the processing portion, said received data representing the processing manner and the prestored first animation data and ; and a unit displaying the second animation data including the message contents.

According to further another aspect, the invention provides a computer-readable record medium bearing an animation data producing program for executing by a computer an animation data producing method of producing second animation data by processing a portion of first animation data with different data, wherein the animation data producing program includes the steps of: extracting element data included in the different data; determining a key frame to be processed among a plurality of key frames included in the first animation data; and processing a portion of the determined key frame based on the element data to produce the second animation data.

According to further another aspect, the invention provides a computer-readable record medium bearing an animation data producing program for executing by a computer an animation data producing method for use in a chat system producing second animation data based on first animation data and external data sent from one or a plurality of terminal devices, and displaying the produced second animation data on the terminal device, wherein the animation data producing program includes the steps of receiving the external data including data for determining a processing portion of the first animation data and data representing message contents; determining a key frame to be processed among a plurality of key frames included in the first animation data based on the data for determining the processing portion; producing the second animation data by processing a portion of the determined key frame with the data representing the message contents; and displaying the second animation data including the message contents on the terminal device.

According to further another aspect, the invention provides a computer-readable record medium bearing an animation data producing program for executing by a computer an animation data producing method for use in a chat system producing second animation data based on first animation data and external data sent from one or a plurality of terminal devices, and displaying the produced second animation data on the terminal device, wherein the animation data producing program includes the steps of sending the external data including data for determining a processing portion of the first animation data and data representing message contents; and determining a key frame to be processed among a plurality of key frames included in the first animation data based on the data for determining the processing portion, processing a portion of the determined key frame with the data representing the message contents, and displaying the second animation data including the message contents produced by the above processing.

According to further another aspect, the invention provides a an animation data producing program for executing by a computer an animation data producing method of producing second animation data by processing a portion of first animation data with different data, including the steps of: extracting element data included in the different data; determining a key frame to be processed among a plurality of key frames included in the first animation data; and processing a portion of the determined key frame based on the element data to produce the second animation data.

According to further another aspect, the invention provides an animation data producing program for executing by a computer an animation data producing method for use in a chat system producing second animation data based on first animation data and external data sent from one or a plurality of terminal devices, and displaying the produced second animation data on the terminal device, including the steps of: receiving the external data including data for determining a processing portion of the first animation data and data representing message contents; determining a key frame to be processed among a plurality of key frames included in the first animation data based on the data for determining the processing portion; producing the second animation data by processing a portion of the determined key frame with the data representing the message contents; and displaying the second animation data including the message contents on the terminal device.

According to further another aspect, the invention provides an animation data producing program for executing by a computer an animation data producing method for use in a chat system producing second animation data based on first animation data and external data sent from one or a plurality of terminal devices, and displaying the produced second animation data on the terminal device, including the steps of: sending the external data including data for determining a processing portion of the first animation data and data representing message contents; and determining a key frame to be processed among a plurality of key frames included in the first animation data based on the data for determining the processing portion, processing a portion of the determined key frame with the data representing the message contents, and displaying the second animation data including the message contents produced by the above processing.

### Brief Description of the Drawings

Fig. 1 conceptually shows an animation data producing system according to the invention.
Fig 2 conceptually shows a mobile terminal (cellular phone) used, e.g., for sending/receiving e-mails and/or browsing webpages over the Internet according to the invention.
Fig. 3 is a functional block diagram illustrating a server according to a first embodiment.
Fig. 4 shows an example of an initial screen display of the mobile terminal connected to the server.
Fig. 5 shows an example of a screen display during an animation chat.
Fig. 6 shows an example of a screen display after touching a "SEND/UPDATE" button.
Fig. 7 shows an example of a screen display produced when the "SEND/UPDATE" button is touched without entering a message in a message entry field.
Fig. 8 is a flowchart illustrating a processing flow from sending of a message to obtaining of new animation in the mobile terminal according to the first embodiment.
Fig. 9 illustrates a table structure of an external data database.
Fig. 10 illustrates a table structure of a model animation database.
Fig. 11 illustrates a table structure of a processing method database.
Fig. 12 is a flowchart illustrating a processing flow from receiving of request data, which is sent from a mobile terminal for requesting sending of a message, to returning of processed animation in the server according to the first embodiment.
Fig. 13 shows an example of a screen display of animation on a mobile terminal used in an animation chat according to the invention.
Fig. 14 shows and example of a screen display of a model animation used for producing the animation in Fig. 13.
Fig. 15 illustrates a table structure of an external data database after registration of a message.
Fig. 16 is a functional block diagram of a server according to a second embodiment.
Fig. 17 is a functional block diagram of a client according to the second embodiment.
Fig. 18 is a flowchart illustrating a flow of processing in the client according to the second embodiment.
Fig. 19 is a flowchart illustrating a flow of processing in the server according to the second embodiment.
Fig. 20 is a flowchart illustrating a procedure of analysis of external data in the server according to the first embodiment.
Fig. 21 shows an example of a screen display including a time designation field in the first embodiment.
Fig. 22 illustrates an example of a table extracted from the external data database in the case where the time designation field is employed in the first embodiment.
Fig. 23 illustrates an animation production flow of the server in the case where the time designation field is employed in the first embodiment.
Fig. 24 shows an example of a screen display including a place designation field in the first embodiment.
Fig. 25 illustrates an example of a table extracted from the external data database in the case where the place designation field is employed in the first embodiment.
Fig. 26 illustrates an animation production flow of the server in the case where the place designation field is employed in the first embodiment.
Fig. 27 shows an example of a screen display in the case where a speaker's name designation field is employed in the first embodiment.
Fig. 28 illustrates an example of a table extracted from the external data database in the case where the speaker's name designation field is employed in the first embodiment.
Fig. 29 illustrates an animation production flow of the server in the case where the speaker's name designation field is employed according to a third embodiment.
Fig. 30 shows an example of a screen display during an animation chat in the third embodiment.
Fig. 31 shows an example of a screen display after touching an animation select button in the third embodiment.
Fig. 32 shows an example of a screen display after touching a confirmation button in the third embodiment.
Fig. 33 shows an example of a screen display after touching a "SEND/UPDATE" button in the third embodiment.
Fig. 34 illustrates a table structure of the external data database in the third embodiment.
Fig. 35 illustrates a table structure of the model animation database in the third embodiment.
Fig. 36 illustrates a table structure of the external data database after registration of messages in the third embodiment.
Fig. 37 illustrates images of the model animation in the third embodiment.
Fig. 38 is a functional block diagram of a client according to a fourth embodiment.
Fig. 39 is a flowchart illustrating a flow of processing in an animation data producing method of performing processing regardless of a format of external data used for processing a model animation.
Fig. 40 illustrates an example of model animation data used in a fifth embodiment.
Fig. 41 conceptually shows the case where the external data is text data.
Fig. 42 conceptually shows the case where the external data is animation data.
Fig. 43 conceptually shows a state, in which a portion of an <EXTERNAL DATA> tag in a model animation is processed with text data of "HELLO!".
Fig. 44 conceptually shows a state, in which the portion of the <EXTERNAL DATA> tag in the model animation is processed with the animation data illustrated in Fig. 42.

### Best Mode for Carrying Out the Invention

Embodiments of the invention will now be described with reference to the drawings.

### [First Embodiment]

This embodiment will now be described in connection with an animation data producing system, in which a plurality of users each having a mobile terminal send messages to a server, and the server processes model animation data (first animation data) with the messages thus sent to produce new animation data (second animation data).

By using this system, users each having a mobile terminal can join a chat while viewing animation produced by the server.

An animation data producing method according to the invention may be applied to systems other than that described in the following embodiments, and may be applied, e.g., to systems in which stationary terminals such as personal computers are used instead of mobile terminals.

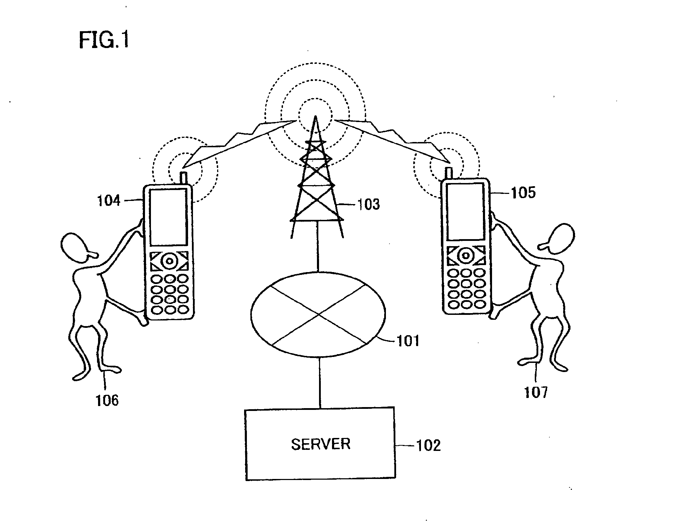

Fig. 1 conceptually shows an animation data producing system according to the first embodiment.

Referring to Fig. 1, the animation data producing system includes a server 102 on a communication network 101 such as the Internet, mobile terminals 104 and 105 such as cellular phones or PHSs (Personal Handyphone Systems) each having a function of performing wireless communication, e.g., for sending/receiving e-mails and browsing webpages over the Internet, and a communication antenna 103 used for wireless connection to the Internet by mobile terminals 104 and 105.

Fig. 1 also shows users 106 and 107 of mobile terminals 104 and 105, respectively.

In this embodiment, it is assumed that cellular phones are used as mobile terminals 104 and 105, which make access to the Internet, e.g., for sending/receiving e-mails and browsing webpages. However, the invention is not restricted to such structures, and other terminals may be employed provided that the terminals have a function of accessing the Internet and performing, e.g., the sending/receiving of e-mails and browsing of webpages. Although Fig. 1 shows only two mobile terminals 104 and 105, the invention is not restricted to this structure, and three or more terminals may be connected to communication network 101.

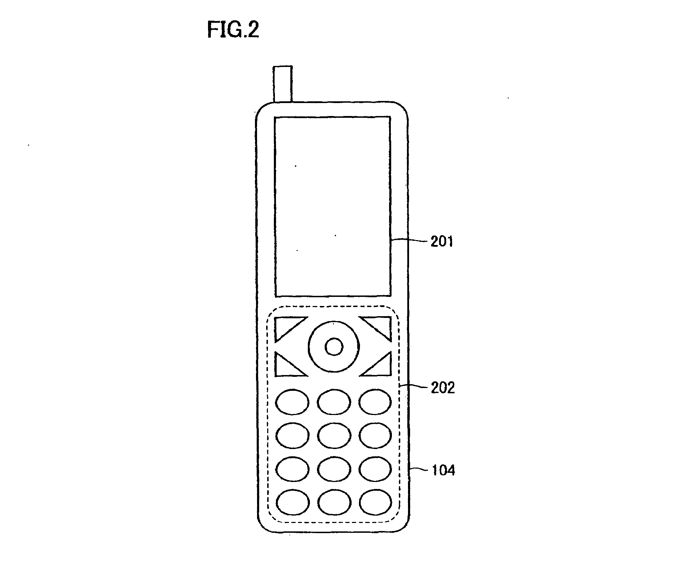

Fig. 2 conceptually shows mobile terminal (cellular phone) 104 or 105 for accessing the Internet and performing, e.g., the sending/receiving of e-mails and browsing of webpages. Referring to Fig. 2, mobile terminal 104 or 105 includes a display 201 displaying text of e-mails, webpages or the like, and a user interface 202 used for text entry, scrolling of a screen of display 201, various manipulations and others.

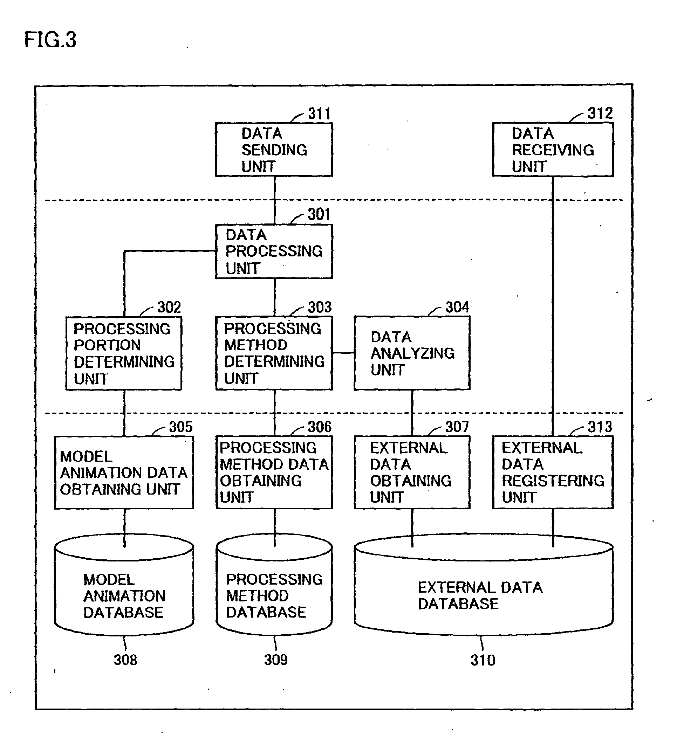

Fig. 3 is a functional block diagram of server 102.

Server 102 includes a model animation database 308 for managing a model animation data to be used as original or initial data for producing new animation, a model animation data obtaining unit 305 obtaining the model animation data for producing the new animation from model animation database 308, and a processing portion determining unit 302 determining a processing portion, i.e., a portion to be processed in the model animation data obtained by model animation data obtaining unit 305.

Server 102 further includes an external data database 310 for managing external data (different data) for producing the new animation, an external data obtaining unit 307 for obtaining the external data from external data database 310, and a data analyzing unit 304 analyzing the external data obtained by external data obtaining unit 307.

Server 102 further includes a processing method determining unit 303 determining a method of processing the model animation data based on results of the analysis by data analyzing unit 304, a processing method database 309 for managing data representing the method of processing the model animation data, and a processing method data obtaining unit 306 obtaining the data representing the processing method from processing method database 309.

Server 102 further includes a data processing unit 301, which produces the new animation by processing the obtained model animation according to the processing portion determined by processing portion determining unit 302 and the processing method determined by processing method determining unit 303.

Server 102 further includes a data sending unit 311, which sends the new animation data processed and produced by data processing unit 301 as well as associated data to mobile terminal 104 or 105.

Further, server 102 includes a data receiving unit 312 receiving the data sent from mobile terminal 104 or 105, and an external data registering unit 313 registering the data received by data receiving unit 312 in external data database 310.

Various components shown in Fig. 3, i.e., model animation database 308, model animation data obtaining unit 305, external data database 310, external data obtaining unit 307, processing method database 309, processing method obtaining unit 306, processing data registering unit 313, data sending unit 311 and data receiving unit 312 may be arranged within server 102, and alternatively may be provided on a computer such as another server, which is located in another place, and is connected to server 102 over the network. In the latter case, distributed processing can be achieved.

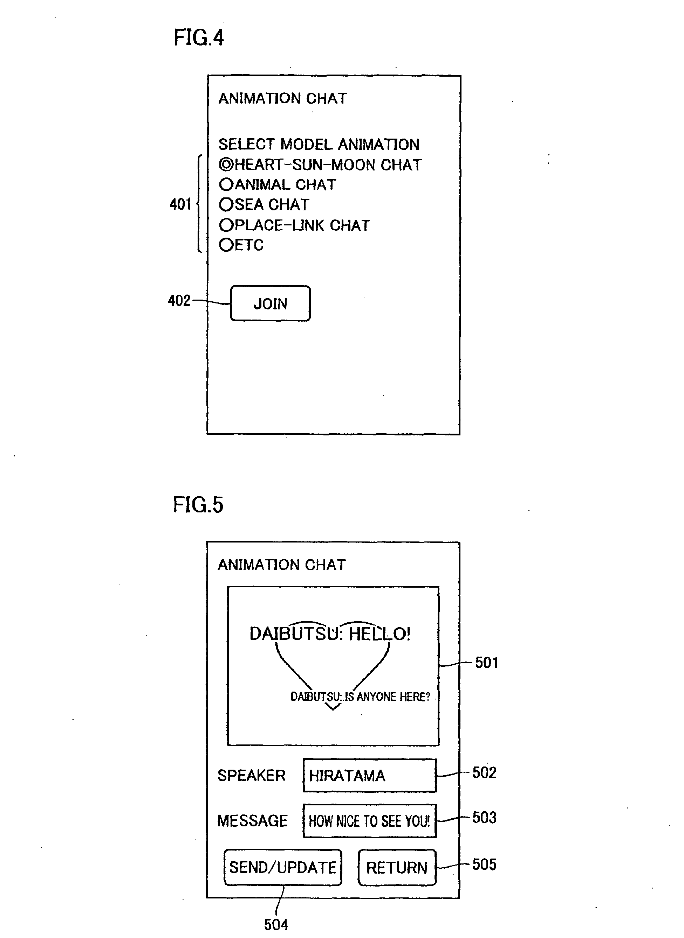

Referring to Figs. 4 to 7, description will now be given on a chat system, which uses the animation data producing system provided in this embodiment, and may be referred to as "ANIMATION CHAT" hereinafter.

Figs. 4 to 7 show examples of screen displays produced on display 201 of mobile terminal 104 or 105.

Fig. 4 shows a startup screen, which is displayed when mobile terminal 104 accesses server 102. The startup screen includes radio buttons 401 for selecting the model animation, and a "JOIN" button 402 for joining the animation chat.

A user selects one from various kinds of model animation with touch of radio button 401, and sends data representing the selected model animation to server 102 so that the kind of the animation to be used in the animation chat can be determined. In this operation, server 102 may manage the data for determining this model animation independently of the data representing contents of the message. For example, user 106 in Fig. 1 selects a "HEAR-SUN-MOON CHAT", and sends a message of "HELLO!". Then, next user 107 selects an "ANIMAL CHAT", and sends a message of "HOW NICE TO SEE YOU!". In this case, the contents of the messages are stored in a common database in time sequence, and the data determining the animation for each user is managed or controlled independently of that for the other user(s). By this independent management, users 106 and 107 can browse the message contents of "HELLO!" and "HOW NICE TO SEE YOU!". Further, user 106 can browse the animation of "HEART-SUN-MOON CHAT", and user 107 can browse the animation of "ANIMAL CHAT".

In Fig. 4, if any model animation is not selected, or mobile terminal 104 does not have a function of the radio buttons, server 102 may determine the kind of animation in the following method. In this case, however, mobile terminal 104 may send the data not containing the data for determining the model animation to server 102, and may send data representing the fact that data determining the model animation is not present.

In a first method of determining the kind of the animation in server 102, the kind of the animation is selected depending on the contents of the message sent from the user. In this case, server 102 analyzes the meaning of received message contents, and select the model animation according to results of this analysis. For example, a user may send a message "Today, I lost my purse, and I'm unhappy ···". In this case, meaning of each word is analyzed, and it is determined in a known meaning analysis method that the message has the contents collectively meaning "unhappy" so that the model animation closest to these contents are selected. For this operation, possible results of the meaning analysis and the kinds of model animation may be managed by keeping correlations between them so that the model animation, which is the closest to the meaning of "unhappy" of the message contents, may be determined among the plurality of models of animation. In this manner, the animation having a high affinity in meaning with the contents of the user's message is automatically selected and displayed. This results in an advantage that a user browsing the animation chat can sensuously grasp the contents at first sight of the animation without specifically reading the test.

In a second method, server 102 randomly or successively selects the plurality of models of animation. Thereby, the user can browse different kinds of animation corresponding to respective messages so that the user can enjoy unexpectedness.

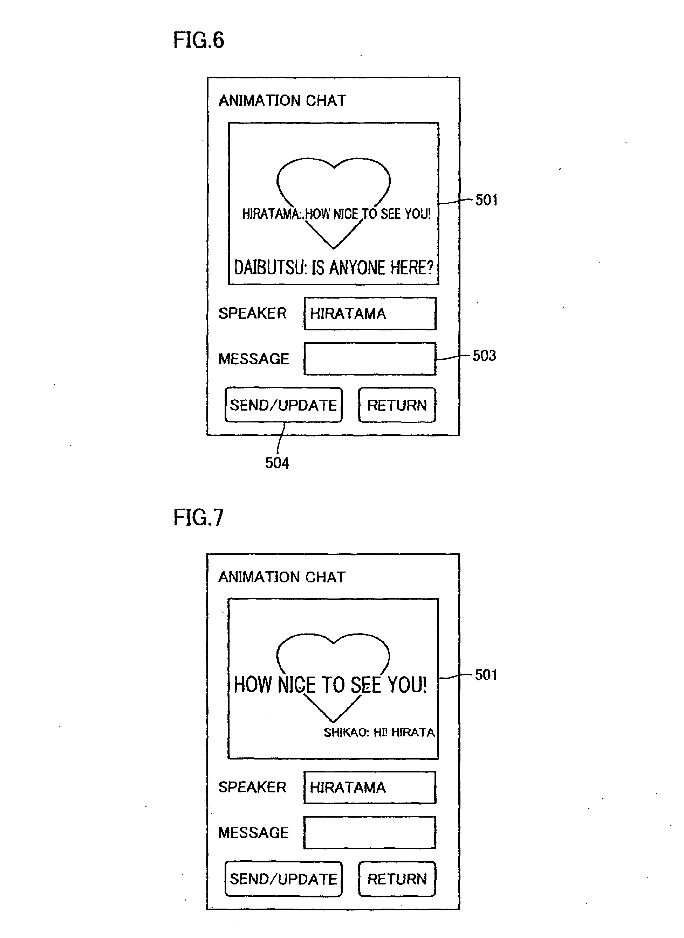

Fig. 5 shows an example of a screen display, which is produced when the user joins the animation chat by touching "JOIN" button 402. On animation display region 501, contents of the message in the animation chat are displayed together with the animation. In the example shown in Fig. 5, messages of "HELLO!" and "IS ANYONE HERE?" of a speaker named "DAIBUTSU" are displayed. However, displayed contents of the animation change with time so that messages of some other speakers will be displayed in animation display region 501 with the passage of time.

A speaker's name entry field 502 is used for entering a name when a speaker sends a message. In the example shown in Fig. 5, a name of "HIRATAMA" is entered. Since user 106 owns mobile terminal 104, the speaker is usually the same as user 106 in many cases. Therefore, the name of user 106 may be a default in speaker's name entry field 502, in which case entry of the name is required only when another name is to be used for sending a message.

A message entry field 503 is provided for entering a message of the speaker. In the example shown in Fig. 5, a message of "HOW NICE TO SEE YOU!" is entered.

A "SEND/UPDATE" button 504 is used for obtaining new animation by sending processing requirement data, which includes element data such as message to be sent, data determining the model animation and control data required for data communication between mobile terminal 104 and server 102. More specifically, when a message is already present in message entry field 503 and "SEND/UPDATE" button 504 is touched, the message is sent to server 102, and new animation including the sent message can be obtained.

When the user touches "SEND/UPDATE" button 504 while no message is present in message entry field 503, the terminal device can obtain the animation produced based on a new message of another user stored in server 102.

In the example described above, the message entered in message entry field 503 is sent as the element data of the processing request data, and the new animation is produced in server 102 based on the message thus sent. However, the element data is not restricted to the message data, and the element data thus sent may include the name of speaker entered in speaker's name entry field 502, place information and/or time information obtained by a GPS (Global Positioning System) and/or dock function provided in mobile terminal 104, data representing a name of a specific speaker, background image information for determining a background of the model animation, animation data and/or image information of a figure picture (e.g., face picture) or the like to be embedded in a portion of the model animation, and/or audio data for outputting music and/or voice when displaying the animation. The element data to be sent from mobile terminal 104 to server 102 may be predetermined in mobile terminal 104, or may be selected by the user upon every sending of the message. Each element data contains in advance a tag, of which matching is already established between mobile terminal 104 and server 102, and server 102 produces new animation from the model animation based on or in connection with the tag. For example, when the message to be sent is "HOW NICE TO SEE YOU!", the "tag" is an identifier representing "message" and assigned to a header of the data. If there is a mismatch between the tag added to the sent message and the tag added to the model animation, the data sent from the mobile terminal may be converted on the server side to achieve the matching. For example, the mobile terminal may send data of a character string, and a replacement target in the model animation may be animation. In this case, replacement processing can be performed after converting the character string to a format of animation.

A "RETURN" button 505 is provided for returning to the screen display shown in Fig. 4 when a user touches it.

Fig. 6 shows an example of a screen display produced after touching "SEND/UPDATE" button 504 in Fig. 5. New animation including the intended message shown in Fig. 5 is displayed in animation display region 501. Thus, "HOW NICE TO SEE YOU!" sent by the speaker "HIRATAMA"' is displayed within the animation.

Fig. 7 shows an example of a screen display produced when a user touches "SEND/UPDATE" button 504 without entering a message in message entry field 503 in Fig. 6.

When another user (e.g., user 107 of mobile terminal 105) using this animation chat sends a new message, new animation including this new message is displayed in animation display region 501. In the example of Fig. 7, a message "HI! HIRATAMA-SAN!" of a speaker named "SHIKAO" is displayed. In the example of the screen display shown in Fig. 7, only a part of message, i.e., "HI! HIRATAMA-SAN!" is displayed. However, the contents of the displayed animation change with time so that the whole message will be displayed with the passage of time.

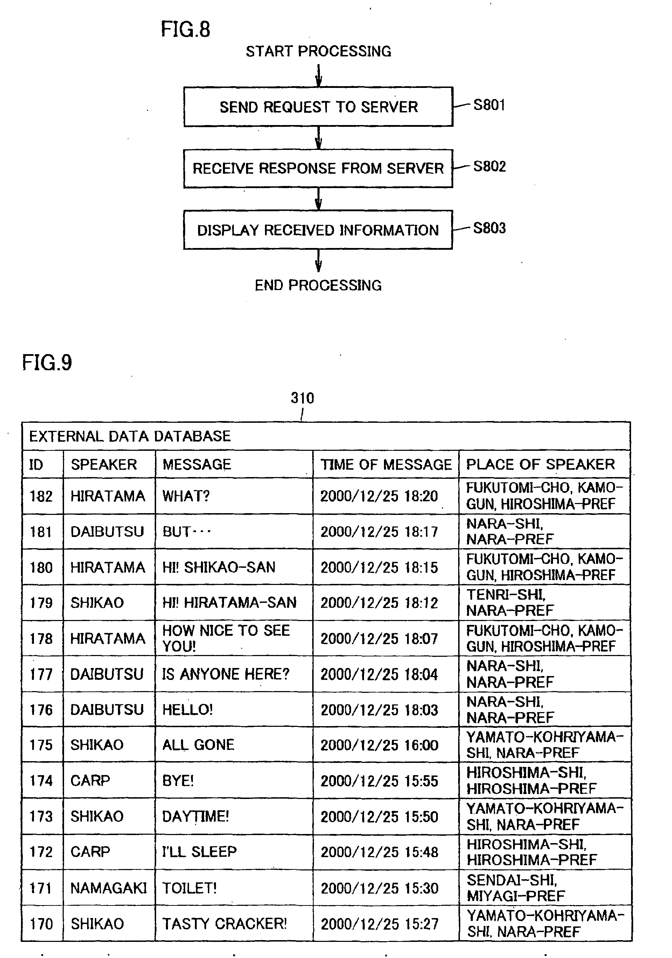

Fig. 8 is a flowchart illustrating a flow of processing from sending of a message to obtaining of new animation in mobile terminal 104, which is used in the animation data producing system according to the embodiment of the invention. First, in a step S801, a processing request data indicating the sending of a message is sent. In this operation, the kind of the model animation to be used for displaying the animation chat, the name of the speaker, the message and others are sent. Further, the position information of the speaker and the time of message may be sent. The position information of the speaker thus sent is obtained by the GPS function, if it is incorporated in the mobile terminal. If the mobile terminal can obtain the position information of the base station, which is currently in communication with the mobile terminal, the position data obtained thereby may be sent as the position information of the speaker. The time of message can be obtained, e.g., by the clock function incorporated in the mobile terminal.

In a next step S802, mobile terminal 104 receives response data representing a response message from server 102. In this operation, mobile terminal 104 receives a HTML (Hyper Text Markup Language) file and others used for displaying the animation data produced by server 102 and webpages. In a subsequent step S803, mobile terminal 104 displays information received from the server on display 201. By repeating the foregoing processing, mobile terminal 104 can receive and display the animation data provided from server 102.

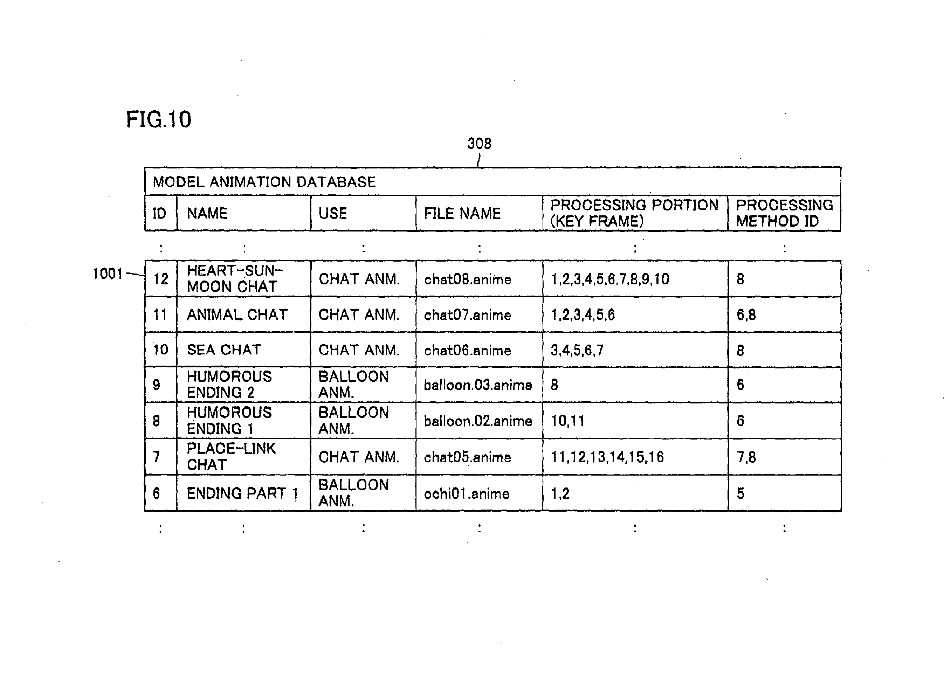

Figs. 9 - 11 illustrate table structures of various databases managed in server 102.

Fig. 9 shows the table structure of external data database 310.

In Fig. 9, the table structure is formed of five attributes of "ID", "SPEAKER", "MESSAGE", "TIME OF MESSAGE" and "PLACE OF SPEAKER". The information belonging to each of these attributes is sent from mobile terminal 104 or 105, and is updated successively. The "ID" is information representing an identifier assigned to each data.

The "SPEAKER" is information representing a name of a user sending a message from mobile terminal 104 or 105. The "MESSAGE" is information representing contents of the message sent from mobile terminal 104 or 105. The "TIME OF MESSAGE" is information representing the time when the message was sent. The "PLACE OF SPEAKER" is information representing a place, from which the speaker sent the message.

From the above, the following can be understood in Fig. 9. The external data having the ID attribute of "182" represents that the speaker is "HIRATAMA", the contents of the message is "WHAT?", the time of message is "2000/12/25 18:20", and the place of speaker is "FUKUTOMI-CHO, KAMO-GUN, HIROSHIMA-PREF".

Fig. 10 represents the table structure of model animation database 308.

In Fig. 10, the table structure is formed of five attributes of "ID", "NAME", "USE", "FILE NAME", "Processing Portion (key frame)" and "Processing Method ID". The respective information items belonging to these attributes are preregistered in model animation database 308. The above "ID" is information representing an identifier uniquely assigned to each model animation. The "NAME" is information representing a name assigned to each model animation. The "USE" is information representing an application using the model animation. The "FILE NAME" is information representing a file name of entity data corresponding to each model animation. The "Processing Portion (key frame)" is information representing a key frame of the animation data to be processed when each model animation is subjected to the processing. The "Processing Method ID" is an identifier representing a processing method, which can be used for each model animation, and corresponds to "ID" in processing method database 309 to be described later. As can be seen, e.g., from the model animation data of the ID attribute of "7", the processing method ID may take two or more values (two values of "7" and "8" in this case). If the two or more values are set in the ID, the optimum processing method can be selected depending on the kind of the message in the external data (e.g., whether it is character string data or music data).

From the above description, it is understood that the ID attribute of "12" in Fig. 10 relates to such model animation data that the name of model animation is "HEART-SUN-MOON CHAT', the application to be used is "CHAT ANIMATION", the file name of the entity data is "chat08.anime", the frame numbers of the animation data to be processed are "1", "2", "3", "4", "5", "6", "7", "8", "9" and "10", and the number representing the processing method is "8".

The ID of "8" corresponds to the value of "ID" in processing method database 309, and therefore, the processing method in this example is "CHARACTER STRING REPLACEMENT".

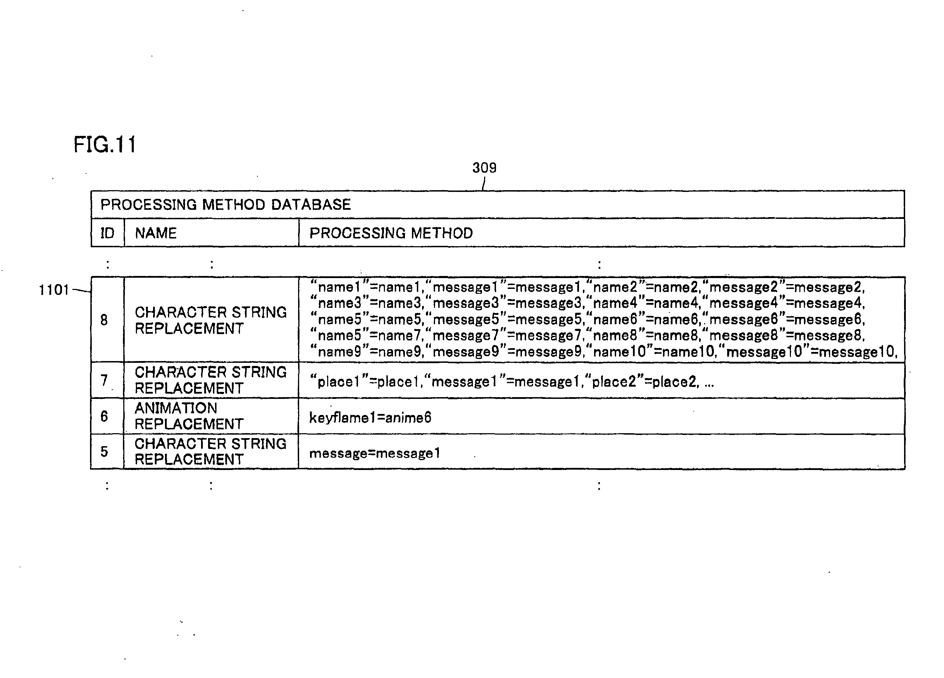

Fig. 11 illustrates a table structure of the processing method database. The table structure is formed of three attributes, i.e., "ID", "NAME" and "PROCESSING METHOD". The "ID" is information representing an identifier uniquely assigned to each processing method. The "NAME" is information representing a name assigned to each processing method. The "PROCESSING METHOD" is information representing specific conversion rules in each processing method.

From the above, it can be understood in Fig. 11 that the ID attribute, e.g., of "8" represents such processing method data that the name of processing method is "CHARACTER STRING REPLACEMENT", and the specific conversion rules in this processing method are ""name1 = name1, "message 1" = message1,^{...}".

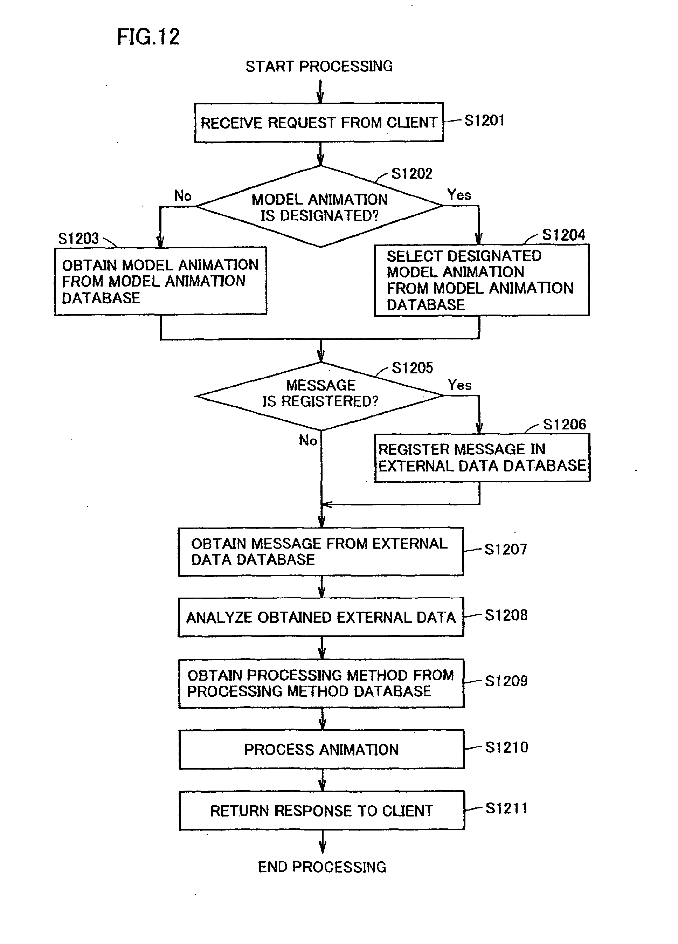

Fig. 12 is a flowchart representing a flow of processing from receiving of message send request data sent from mobile terminal 104 to sending of the processed animation to mobile terminal 104.

First, in a step S1201, a request is received from a client, i.e., mobile terminal 104. Then, in a step S1201, it is determined whether the kind of model animation is designated in the request sent from the client or not.

If the kind of model animation is not designated, the operation goes to a step S1203. If it is designated, the operation goes to a step S1204.

In step S1203, the model animation to be handled in the application, which is currently running, is automatically obtained from model animation database 308.

For automatically obtaining the model animation, the system may employ, e.g., a manner of randomly selecting the model animation from available models of animation.

In step S1204, the model animation matching with the identifier, which indicates the kind of the model animation designated in the request by the client, is obtained from model animation database 308.

In a next step S1205, it is determined whether registration of a message is present in the request received from the client or not. If the registration of the message is present, processing in a step S1206 is performed. If not, processing in a step S1207 is performed.

In step S1206, the message and the time of message, which are provided in the client's request, are registered in external data database 310. If the client's request includes the name of speaker, the time of message and the place of speaker, these items of information are registered in external data database 310. When the processing in step S1206 ends, the processing in step S1207 starts.

In step S1207, the message, the external data such as the name of speaker and others, which are used for the processing the model animation, are obtained from external data database 301. In a step S1208, the external data obtained in step S1207 is analyzed.

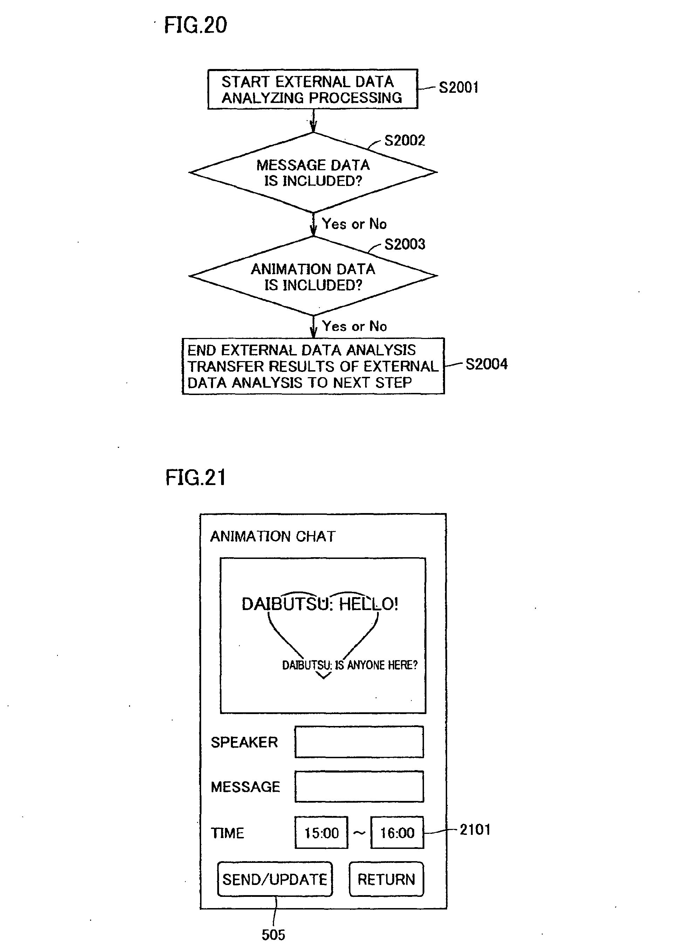

The procedure for analyzing the external data in step S 1208 is illustrated in a flowchart of Fig. 20. When the analysis of the external data starts (step S2001), it is determined whether the external data includes the message data or not (step S2002), and then it is determined whether the external data includes the animation data or not (step S2003). Results of the analyses are transferred to the next processing step, and the analyzing processing ends (step S2004). In this embodiment, the message of the external data is represented by character string data. However, the message of external data may be of another kind of message represented, e.g., by part (or element) data of animation or music data, in which case the processing method is changed depending on the kind of the external data.

In a next step S1209, the processing method for the model animation is obtained from processing method database 309. The processing method thus obtained is the optimum processing method, which is selected from the processing methods available for the model animation obtained in step S1203 or 1204, and depends on the kind of the external data analyzed in step S1208.

More specifically, the processing method IDs available for the selected model animation are obtained from the model animation database 308, and then the processing method to be employed in the processing method database 309 is determined according to the results of analyses of the external data described above. For example, when "ANIMAL CHAT" of ID "11" in model animation database 308 is selected as the model animation data in Fig. 10, "CHARACTER STRING REPLACEMENT" of the ID of "8" and "ANIMATION REPLACEMENT" of the ID of "6" in processing method database 309 can be utilized as the processing method. When it is determined from the results of analysis of the external data that the external data is formed of only the message of the character strings, "CHARACTER STRING REPLACEMENT" of the ID of "8" is employed as the processing method. When it is determined that the external data is formed of only the animation, "ANIMATION REPLACEMENT" of the ID of "6" is employed as the processing method. When it is determined that the external data includes both the message of the character strings and the animation, "CHARACTER STRING REPLACEMENT" of the ID of "8" and "ANIMATION REPLACEMENT' of the ID of "6" are both employed. In this manner, the optimum processing method is selected.

When the animation data producing system is configured to perform the processing regardless of the format of the external data, a predetermined processing method can be used without analyzing the external data.

In a next step S1210, the model animation obtained in step S1203 or 1204 is processed according to the external data obtained in step S1207 and the processing method obtained in step S1208, and thereby new animation is produced. In a step S1211, information required for displaying the new animation and webpages thus produced is sent to the client as the response data.

The processing from step S 1201 to step S1211 is repeated so that server 102 can produce and send the new animation to mobile terminal 104.

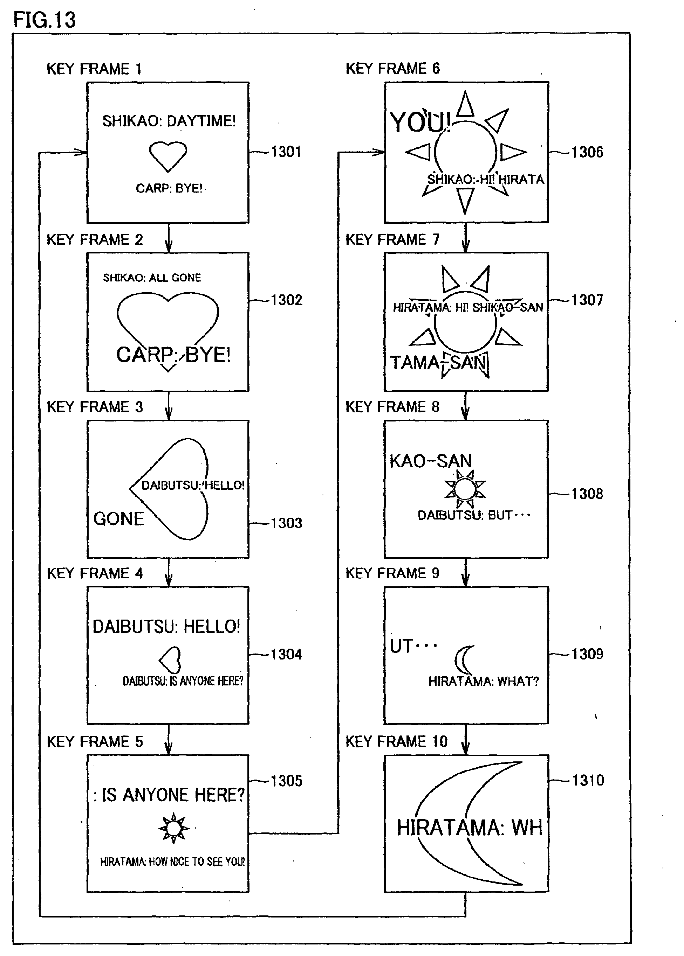

Fig. 13 shows, by way of example, the screen display of the animation, which is produced on mobile terminal 104 used in the animation chat according to the embodiment.

Fig. 13 shows, by way of example, a flow of the animation produced by server 102 in time sequence.

In Fig. 13, the screen display smoothly changes in the order of images 1301, 1302, ^{...} and 1310 while interpolating intermediate frames between key frames. Displayed images 1301, 1302, ^{...} and 1310 correspond to the key frames of the animation, respectively.

In server 102, the animation is produced in the manner, which is shown in Fig. 13, and will be described below.

In this example, it is assumed that a user "HIRATAMA" selects the model animation of "HEART-SUN-MOON CHAT" in mobile terminal 104, and sends a message "WHAT?". Server 102 receiving this message selects the model animation (1001 in Fig. 10) of the "HEART-SUN-MOON CHAT" from model animation database 308 in step S1204 of Fig. 12, and obtains the external data including the message and others from external data database 310 in step S1207.

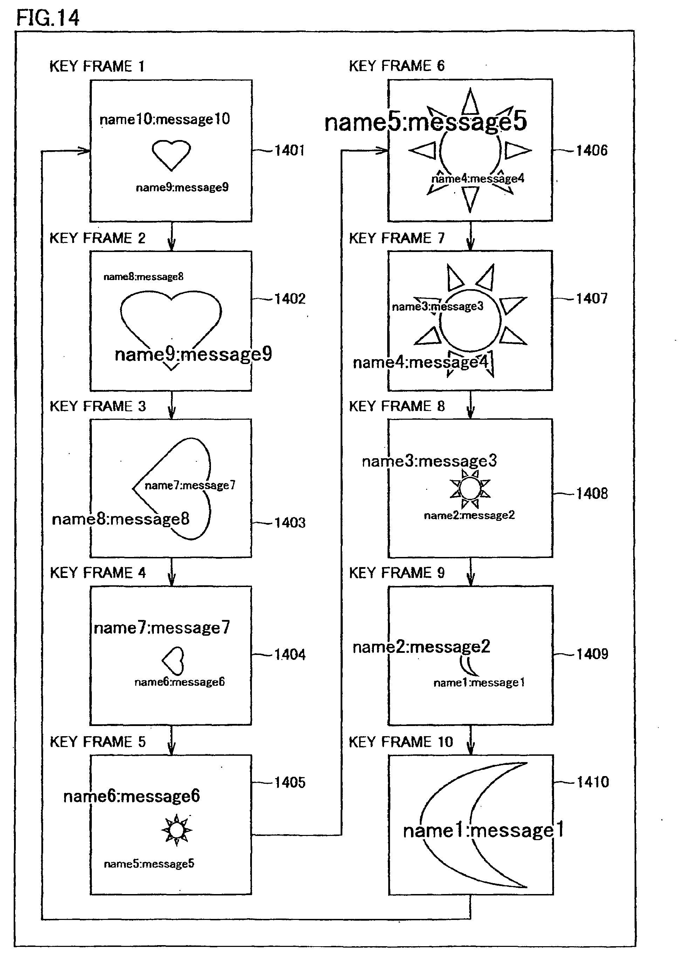

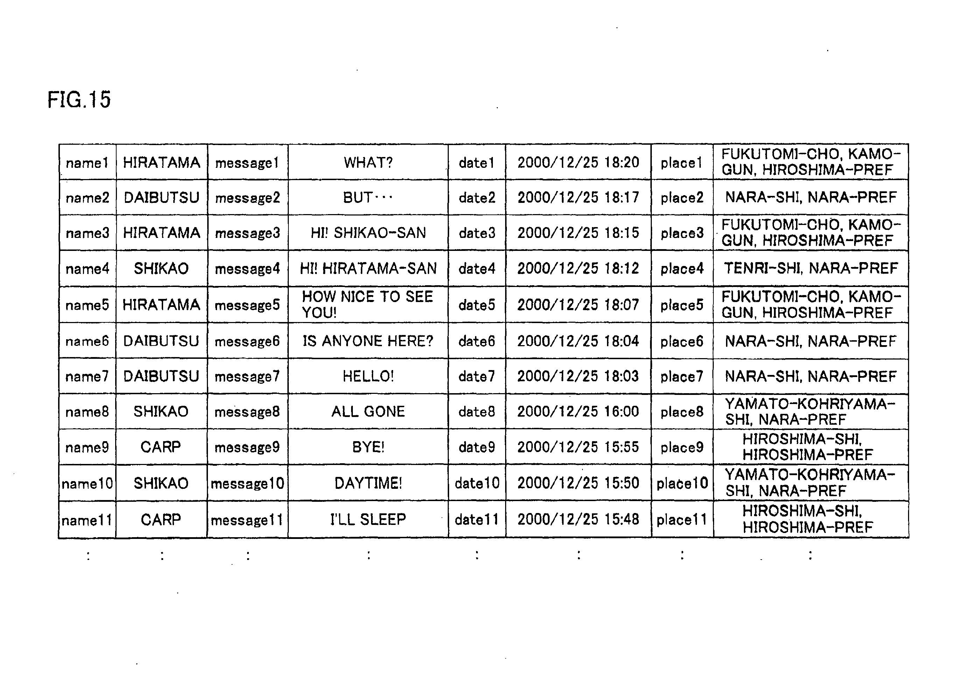

Fig. 14 shows, by way of example, the screen display of the model animation in the "HEART-SUN-MOON CHAT", which is depicted for the sake of illustration, and the animation in Fig. 13 is actually displayed instead of that in Fig. 14. Fig. 15 illustrates a table structure of external data database 310 after the message "WHAT?" is registered.

Elements of the obtained external data bear tags of "message1", "name2", "message2", ···,as illustrated in Fig. 15, respectively.

In step S1208 shown in Fig. 12, the contents of the obtained external data are analyzed, and the processing method of model animation 1001 of the "HEART-SUN-MOON CHAT" is selected from processing method database 309 in step S1209. In this case, the ID representing the processing method is "8" so that the processing method corresponding to this ID value is selected from processing method database 309 in Fig. 11, and particularly, the processing method of "CHARACTER STRING REPLACEMENT" indicated by 1101 is selected.

The processing method of the character string replacement indicated by 1101 is ""name1" = name1, "message1" = message1, ^{...}". This can be generally expressed as ""nameN" = nameN, "messageN" = messageN" where N is an integer. This expresses rules that a character string, i.e., element data bearing a tag of "name1" in the model animation is replaced with element data bearing a tag of "name1" in the obtained external data, and a character string, i.e., element data bearing a tag of "message1" in the model animation is replaced with element data bearing a tag of"message1" in the obtained external data. Thus, the character strings of "name1" and "message1" displayed in the model animation 1409 or 1410 in Fig. 14 are replaced with the character strings of "HIRATAMA" and "WHAT?" bearing the tags of "name1 and "message1", respectively, so that the animation indicated by 1309 or 1310 in Fig. 13 is produced.

The sizes and positions of "name1", "message 1", "name2", "message2" and others in the model animation in Fig. 14 vary depending on the key frame, and such size information and position information are reflected in the animation subjected to the replacement. For example, "name2" in key frame 9 partially lies outside the display frame. This represents that the portion lying outside the frame is not displayed.

In this embodiment described above, the animation is produced based on the message registered via the terminal. However, when the request is sent to server 201 in step S801 of Fig. 8, information relating to the time may be sent together with other information the request. Thereby, it is possible to select the data relating to a specific time as the external data to be used for producing the animation in server 201.

Specific examples 21 - 23 will now be described.

Fig. 21 shows an example of a screen display of an animation chat, which differs from that in Fig. 5 in that a time designation field 2101 is provided. When a user touches "SEND/UPDATE" button 505 after entering a specific time range in time designation field 2101, predetermined data is sent to server 102, and server 102 extracts the external data sent within the designated time range to produce the animation based on the extracted data. Thereby, users of the animation chat can browse the contents of the messages produced at the specific time. If the time before the current time is designated, the contents of the messages produced in the past can be browsed. If the time after the current time is designated, it is possible to reserve the browsing of the contents of messages, which will be produced in the future. In the latter case, server 102 may be configured to send results of the message contents to mobile terminal 104 when the designated time range expires. By designating the time in these manners, the following advantage can be achieved. For example, in the animation chat, members of the animation chat can be informed of the fact that discussion will be conducted on the theme of "XXX" from 10:00 to 11:00 on January 1, 2001, and this time range can be set as the range for the discussion about the theme of "XXX". In this case, users who wish to browse the contents of messages relating to this theme can designate the time range. Thereby, the users can reserve the browsing of the message contents relating to the above theme in the substantially same manner as usual record programming of television programs.

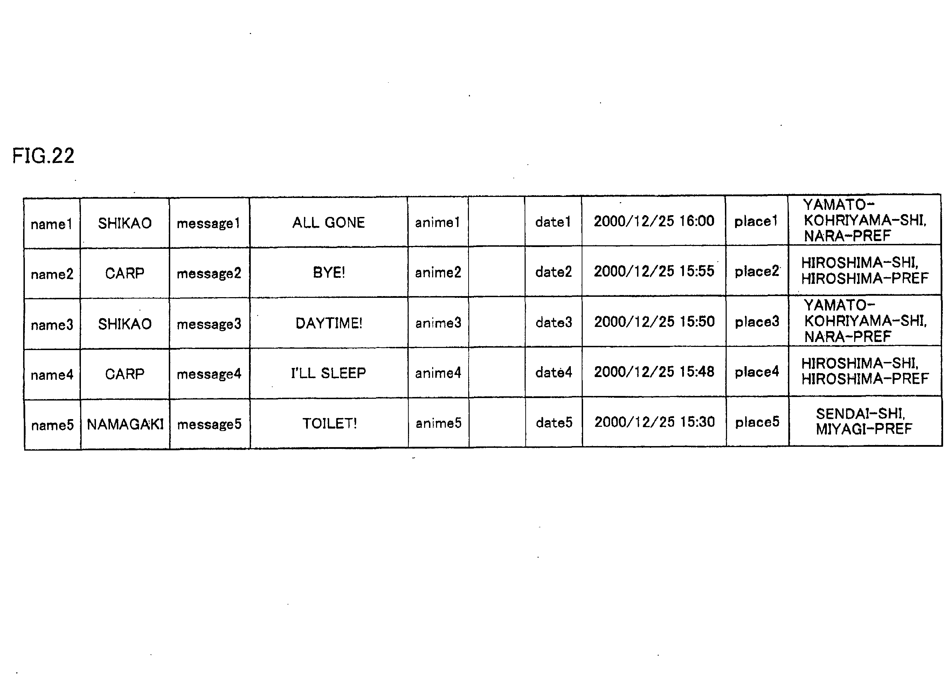

Fig. 22 illustrates an example of a table, which is extracted from external data database 310 in the case where the time range from 15:00 to 16:00 is designated in time designation field 2101 as shown in Fig. 21. As illustrated in Fig. 22, each data in this extracted table is in the range from 15:00 to 16:00, as illustrated in Fig. 22. In this server 102, the animation is produced based on this table.

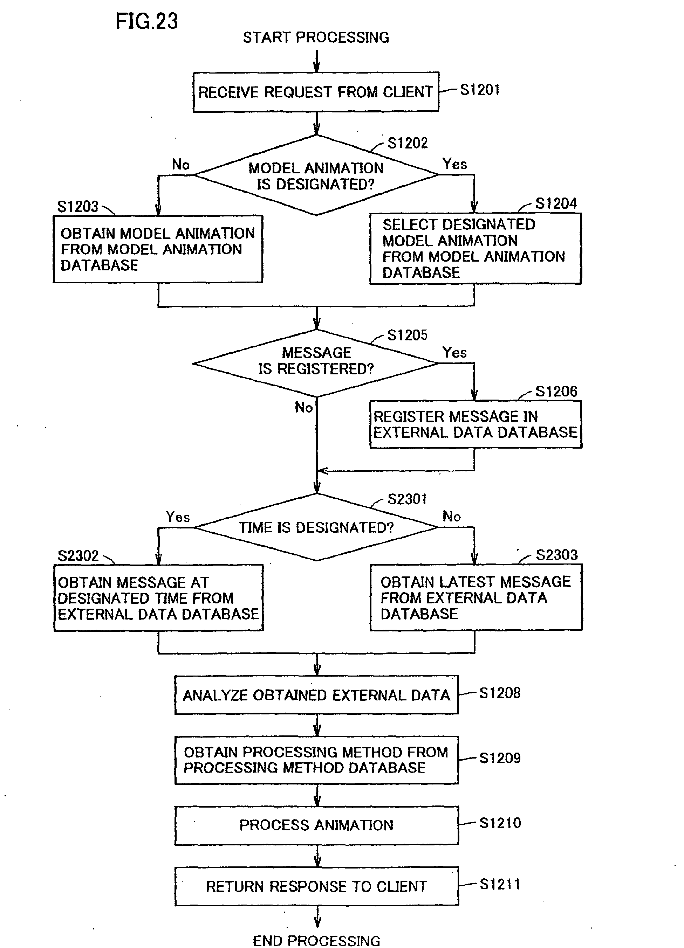

Fig. 23 illustrates a flow of animation production performed in server 102 when the time is designated. This flow differs from that of Fig. 12 in that processing in steps S2301 - S2303 is added.

In step S2301, it is determined whether the time is designated in the request sent from mobile terminal 104 or not. When the time is designated, processing in step S2302 is performed. If not, processing in step S2302 is performed.

In step S2302, the message produced at the designated time is extracted from external data database 310, and the operation goes to step S1208.

In step S2303, the latest message is obtained from external data database 310 similarly to the processing in Fig. 12, and the operation goes to step S1208.

In step S801 of Fig. 8, when a request is sent to server 201, information relating to the position is also sent so that the data related to the specific position can be selected as the external data to be used for preparing the animation in server 201.

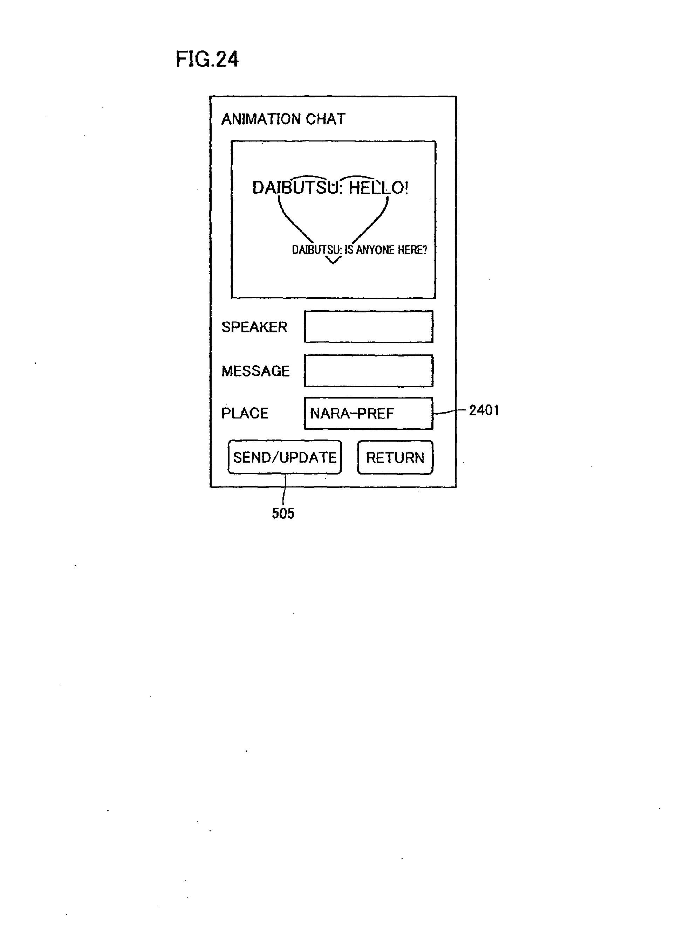

Specific examples will now be described with respect to Figs. 24 to 26.

Fig. 24 shows, by way of example, a screen display produced during the animation chat, and differs from that in Fig. 5 in that a place designation field 2401 is employed. When a user designates a specific place in place designation field 2401, and touches "SEND/UPDATE" button 505, predetermined data is sent to server 102, and server 102 extracts the external data, which is produced in the designated place (or an area including the designated place), to produce the animation based on the extracted data. Thereby, the user of the animation chat can browse the contents of the messages produced in the specific place. This designation of the place can promote the formation of the community formed of people in the specific area, which is an advantage achieved by such designation. More specifically, if a user living in Nara prefecture wishes to make contact with people in neighboring prefectures, the user enters "NARA PREFECTURE" in place designation field 2401. Thereby, the user can browse messages of other users, who designated Nara prefecture. If a user in Nara prefecture wishes to make contact with people in a remote region (e.g., Tokyo Metropolis), the user can enter "TOKYO METROPOLIS" in place designation field 2401.

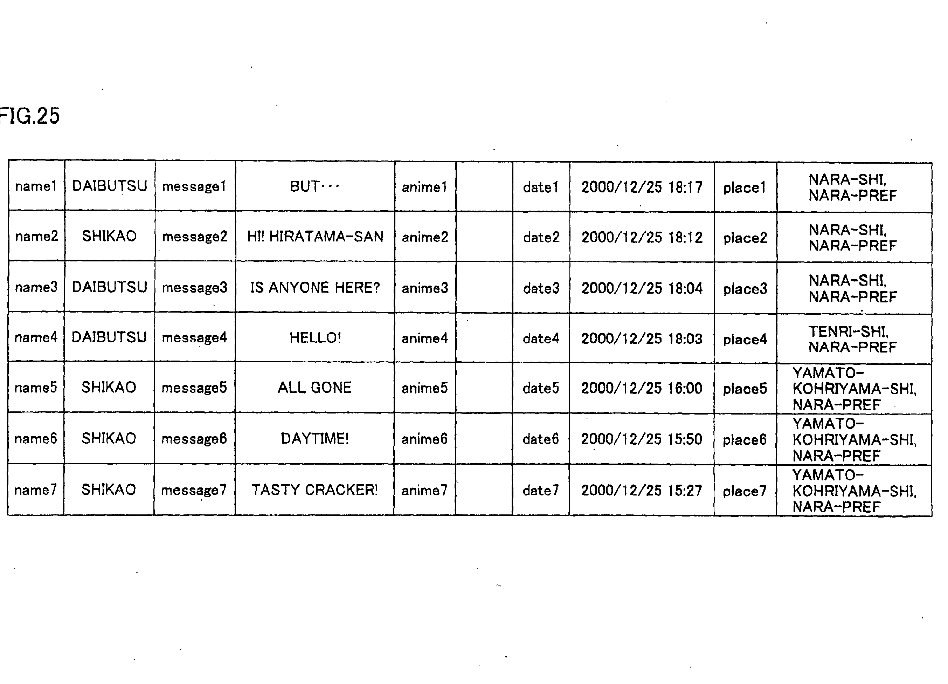

Fig. 25 illustrates an example of a table, which is extracted from external data database 310 when a user entered "NARA PREFECTURE" in place designation field 2401 as shown in Fig. 24.

As illustrated in Fig. 25, each data in the extracted table includes the place of "NARA PREFECTURE". Server 102 produces the animation based on this table.

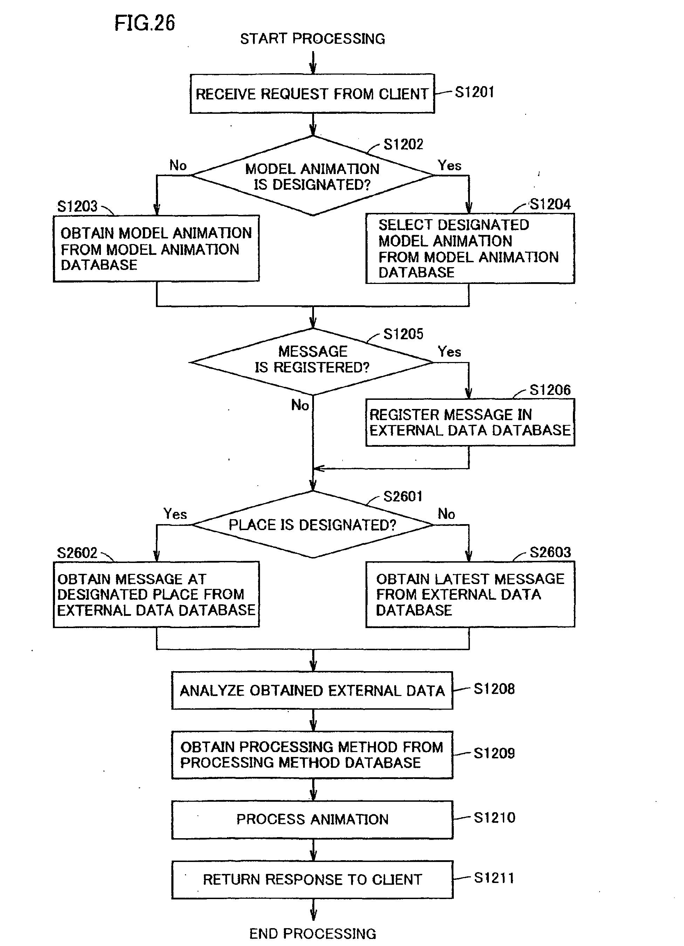

Fig. 26 illustrates a flow of animation production performed by in server 102 when the place is designated. This flow differs from that in Fig. 12 in that processing in steps S2601- S2603 is added.

In step S2601, it is determined whether the place is designated in the request sent from mobile terminal 104 or not. When the place is designated, the operation goes to step S2602. If not, the operation goes to step S2603.

In step S2602, the messages produced at the designated time are extracted from external data database 310, and the operation goes to step S1208. In step S2603, the latest message is obtained from external data database 310 similarly to the flow in Fig. 12, and the operation goes to step S1208.

When the user sends a request to server 201 in step S801 of Fig. 8, information relating to the name of speaker is sent together with other information so that the data relating to the specific speaker can be selected as the external data to be used for producing the animation in server 201.

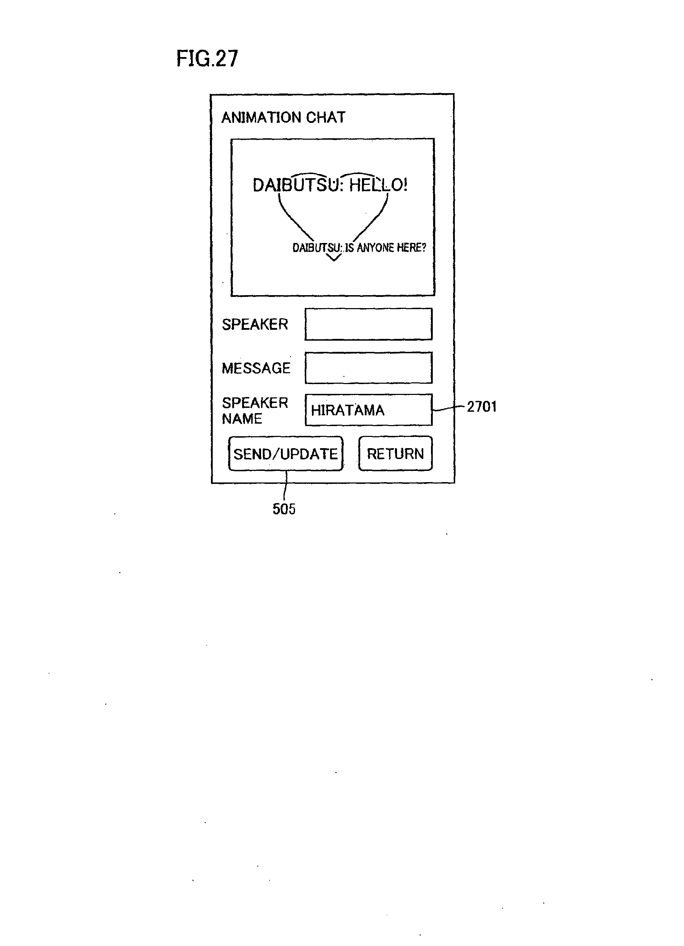

Specific examples will now be described with reference to Figs. 27 to 29.

Fig. 27 shows an example of a screen display for the animation chat, which is different from that shown in Fig. 5 in that a speaker's name designation field 2701 is employed. When a user enters a name of a specific speaker in speaker's name designation field 2701, and touches "SEND/UPDATE" button 505, predetermined data is set to server 102 so that server 102 extracts the external data produced in a specified time range, and the animation is produced based on the extracted data. Thereby, the user of the animation chat can browse contents of the message produced by the specific speaker. The designation of the speaker's name can achieve such an advantage that the user can browse a user's message history or a message history of a specific speaker.

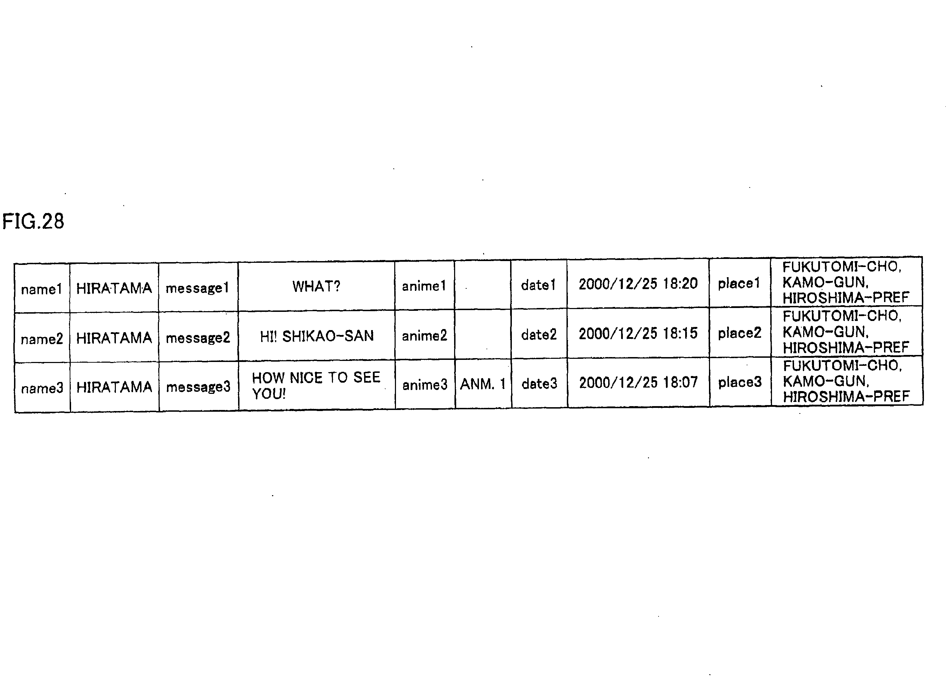

Fig. 28 shows an example of a table, which is extracted from external data database 310 when the speaker's name of "HIRATAMA" is entered in speaker's name designation field 2701 as shown in Fig. 27. As shown in Fig. 28, the speaker's name is "HIRATAMA" in each of data items in the extracted table. Server 102 produces the animation based on this table.

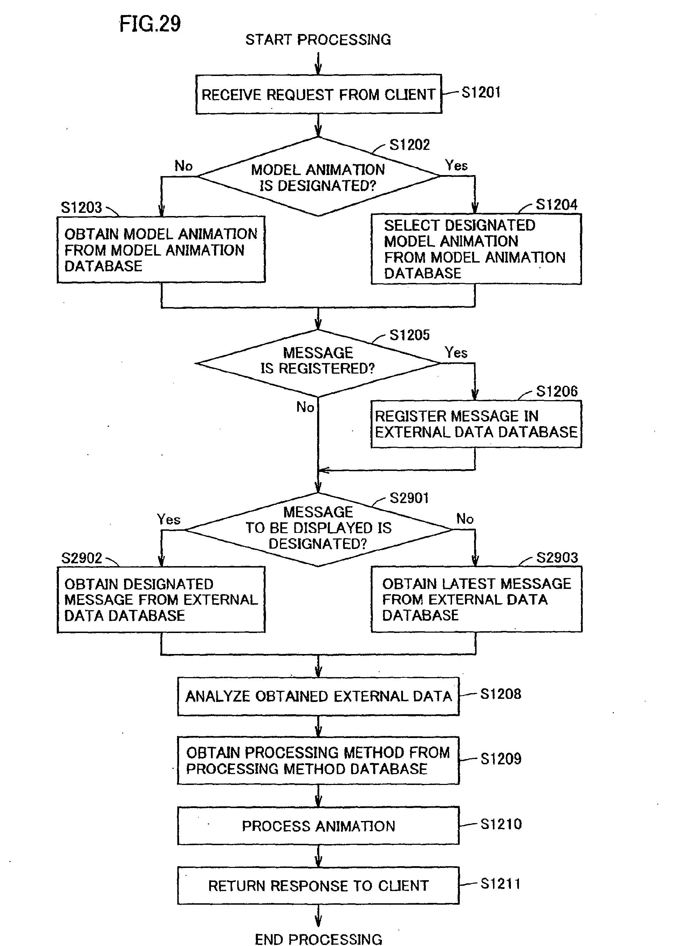

Fig. 29 shows a flow of animation production performed in server 102 when the speaker's name is designated. This flow differs from that in Fig. 12 in that processing in steps S2901 - S2903 is added.

In step S2901, it is determined whether the request sent from mobile terminal 104 includes the designation of place or not. If it includes the designation of place, the operation goes to step S2902. If not, the operation goes to step S2903.

In step S2902, messages produced at the designated time are extracted from internal data database 310, and the operation goes to step S1208.

In step S2903, the latest message is obtained from external data database 310 similarly to Fig. 12, and the operation goes to step S1208.

The foregoing time, place and speaker's name can be appropriately combined when designating them.

### [Second Embodiment]

In a second embodiment, mobile terminal 104 performs a part of processing, which is performed by server 102 in the first embodiment, for distributing the processing. The model animation to be used for producing the animation in the mobile terminal 104 as well as the information relating to the external data are sent to server 102. Server 102 determines a portion to be processed in the model animation data and a processing method based on the information received from mobile terminal 104; and sends them to mobile terminal 104. Mobile terminal 104 processes and displays the model animation based on the information received from server 102.

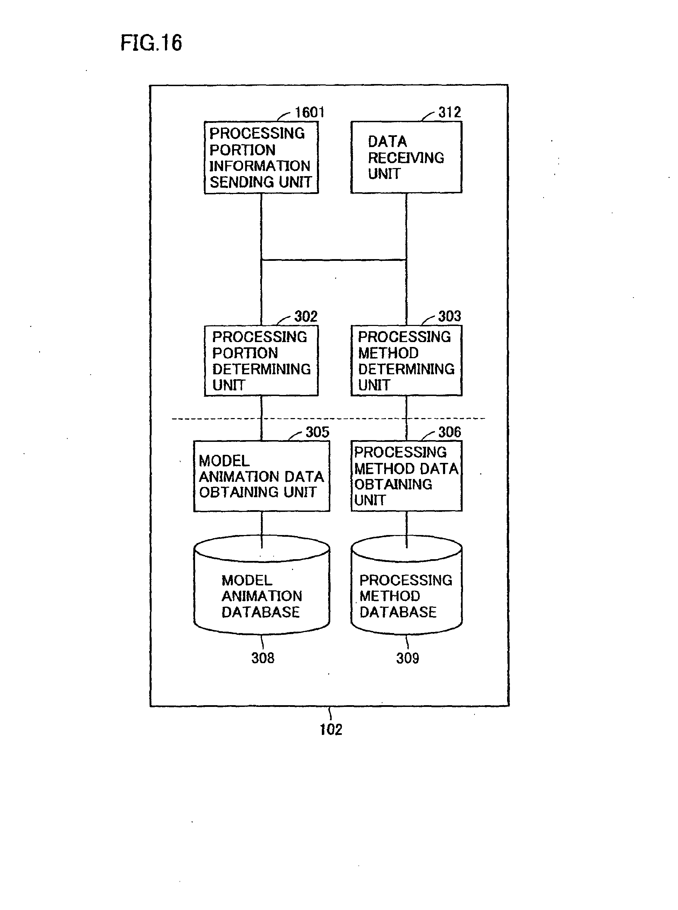

Fig. 16 is a functional block diagram of server 102 according to the second embodiment.

The same portions as those in Fig. 3 bear the same reference numbers, and description thereof is not repeated.

A processing portion information sending unit 1601 sends the processing portion determined by processing portion determining unit 302 and the processing method determined by the processing method determining unit 303 to mobile terminal 104. Thus, server 102 ends the information relating to the processing portion of the data and the processing method to mobile terminal 104, and does not send the processed animation data body.

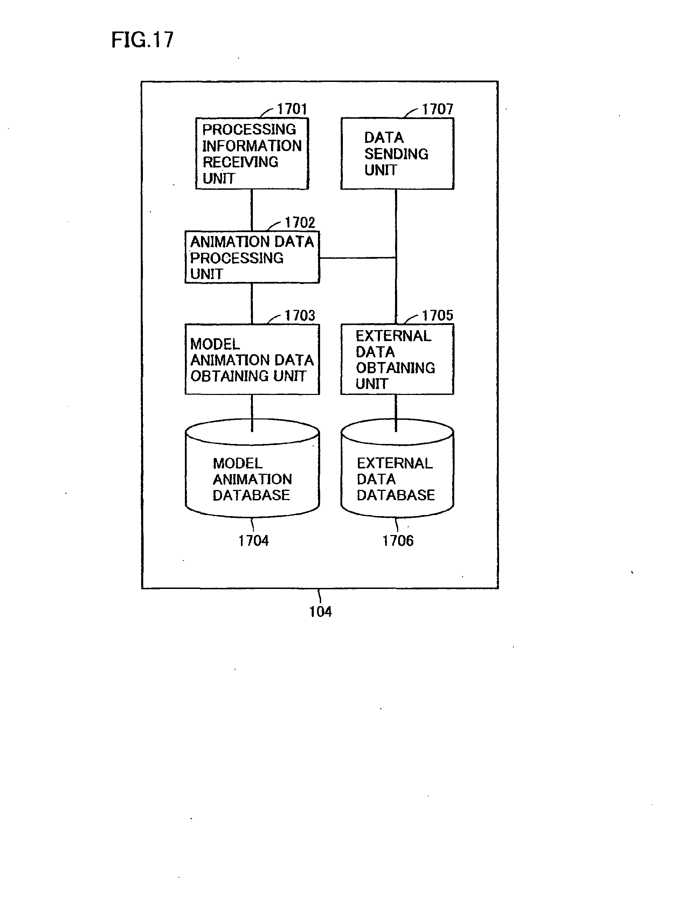

Fig. 17 is a functional block diagram of a client according to the second embodiment. The client is mobile terminal 104 or 105 in Fig. 1.

A processing information receiving unit 1701 receives information relating to the processing portion and the processing method sent from server 102. An animation data processing unit 1702 processes the model animation based on the information received from server 102 while using the external data, and thereby produces new animation. A model animation data obtaining unit 1703 obtains the model animation data to be used for producing the animation from the plurality of models of animation stored in a model animation database 1704. An external data obtaining unit 1705 obtains the external data to be used for producing the animation from the plurality of external data stored in an external data database 1706. A data sending unit 1707 sends the information relating to the model animation used for producing the animation and the external data to server 102. Thus, mobile terminal 104 receives the information relating to the processing portion of the data and the processing method, and does not receive the processed data body.

Model animation database 1704 and external data database 1706 may be kept within the client, or may be kept on a computer such as a server, which is connected over the network and is located in another place.

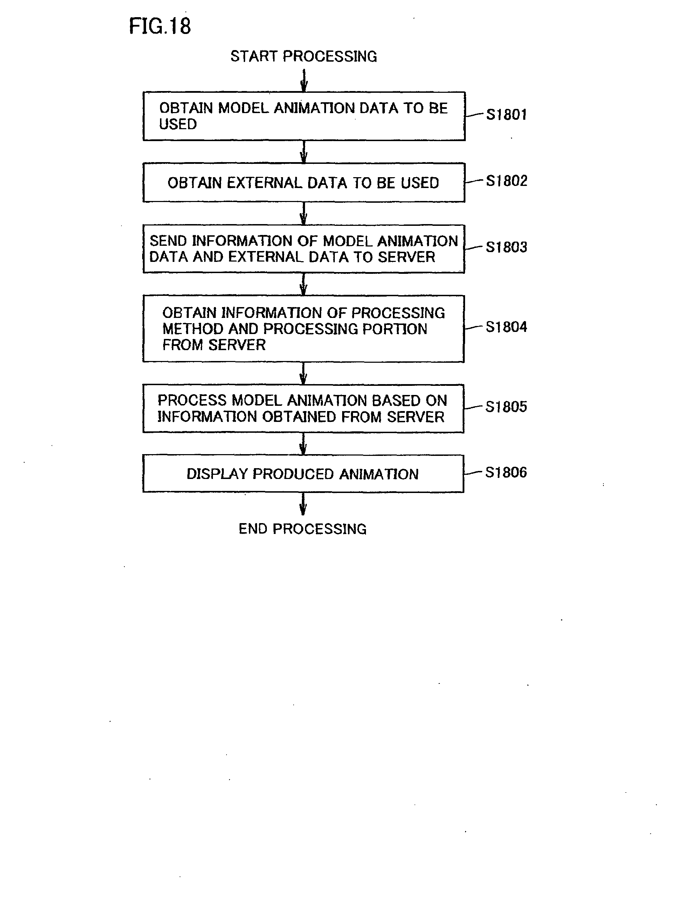

Fig. 18 is a flowchart illustrating a flow of processing on the client side according to the second embodiment. In a step S1801, the model animation data to be used is obtained, and the external data to be used is obtained in a step S1802.

In a next step S1803, the model animation data and the external data are sent to server 102.

In a next step S1804, the information relating to the processing portion and the processing method are obtained from server 102.

In a next step S1805, the model animation data is processed to produce new animation based on the information obtained from server 102. Then, the animation thus produced is displayed in a next step S1806.

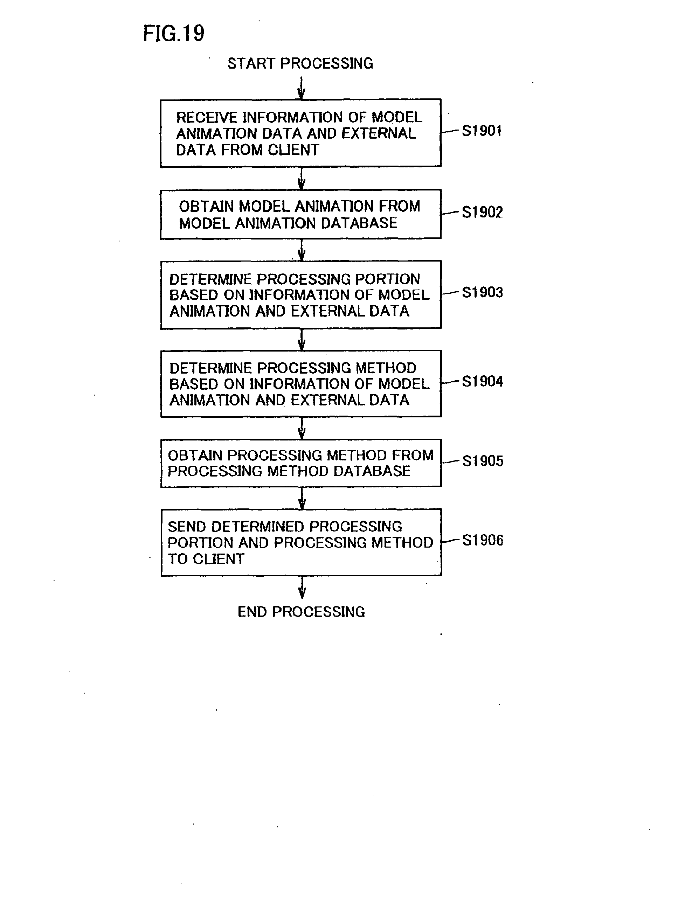

Fig. 19 is a flowchart illustrating a flow of processing on the server side according to the second embodiment. First, in a step S1901, the information relating to the model animation data and the external data are received from the client. Then, in a step S1902, the model animation is obtained from the model animation database.

In a next step S1903, the processing portion in the model animation is determined based on the model animation and the external data.

Further, in a step S1904, the processing method of the model animation is determined based on the information relating to the model animation and the external data. In a next step S1905, the processing method is obtained from the processing method database. In a final step S1906, the processing portion and the processing method thus determined are sent to the client.

In this embodiment, the animation data is processed in such a manner that the information relating to the processing portion and the processing method is sent and received, and the animation data, which is actually processed, is not sent and received. In general, the information relating to the processing portion and the processing method has a data size much smaller than that of the processed animation data. Therefore, the data communication performed for the animation processing can be much smaller in amount than that in the system of the first embodiment. Thus, the system according to the embodiment is very useful when it is formed on a communication network of a narrow range.

### [Third Embodiment]

A major difference between a third embodiment and the first embodiment is that a speaker can send animation as a part or a whole of message to server 102.

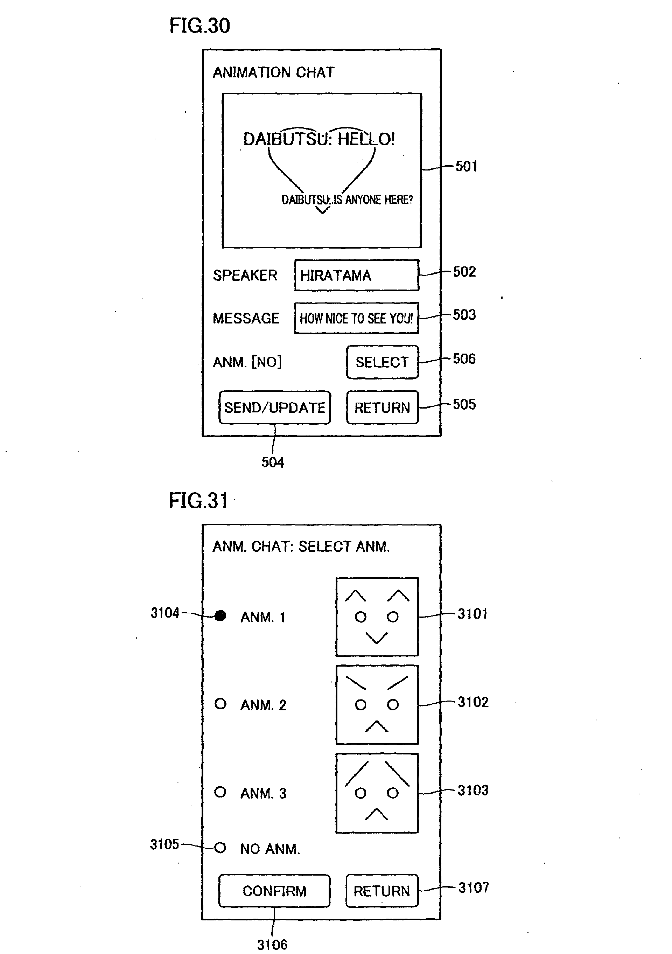

The third embodiment will now be described with reference to Figs. 30 to 37. However, description of processing similar to that in the first embodiment is not repeater.

Fig. 30 shows an example of a screen display produced when a user joins the animation chat by selecting "JOIN" button 402 in Fig. 4. This screen display is different from that in Fig. 5 in that an animation select button 506 is employed for selecting the animation to be sent to server 102. For the sake of simplicity, it is assumed that the other information and data such as a speaker's name and message contents are the same as those in the first embodiment. Fig. 30 shows the screen display produced when no animation is selected. Therefore, "NO ANM." is displayed on the left of animation select button 506. In this case, mobile terminal 104 does not send the animation to server 102 so that the contents of the processing are similar to those in the first embodiment already described.

Fig. 31 shows an example of a screen display, which is produced after animation select button 506 is produced.

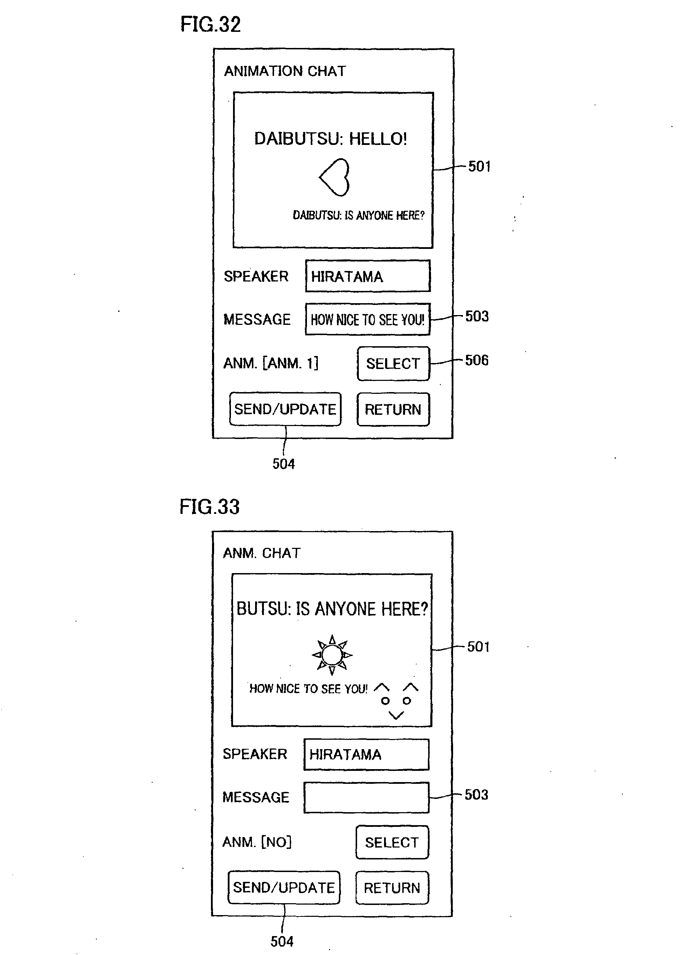

Animation examples 3101 - 3103 to be sent can be selected with the touch of radio buttons 3104. In Fig. 31, the radio button corresponding to "Anm. 1" is highlighted so that "Anm. 1" is selected. A radio button 3105 is selected when the animation is not to be sent. A confirmation button 3106 is used for confirming the animation selection, and a next screen display in Fig. 32 is produced when confirmation button 3106 is touched. When a button 3107 is touched, the current animation selection is cancelled, and the screen display returns to that in Fig. 30.

Fig. 32 shows an example of a screen display, which is produced when "Anm. 1" is selected in Fig. 1 and the confirmation button 3106 is touched. It can be understood that the "Anm. 1" is selected. When "SEND/UPDATE" button 504 is then touched, predetermined processing request data is sent to server 102, and server 102 performs predetermined processing. A result of this processing is sent to mobile terminal 104, and the message sent from the speaker and the animation are displayed in animation display region 501 as shown in Fig. 33.

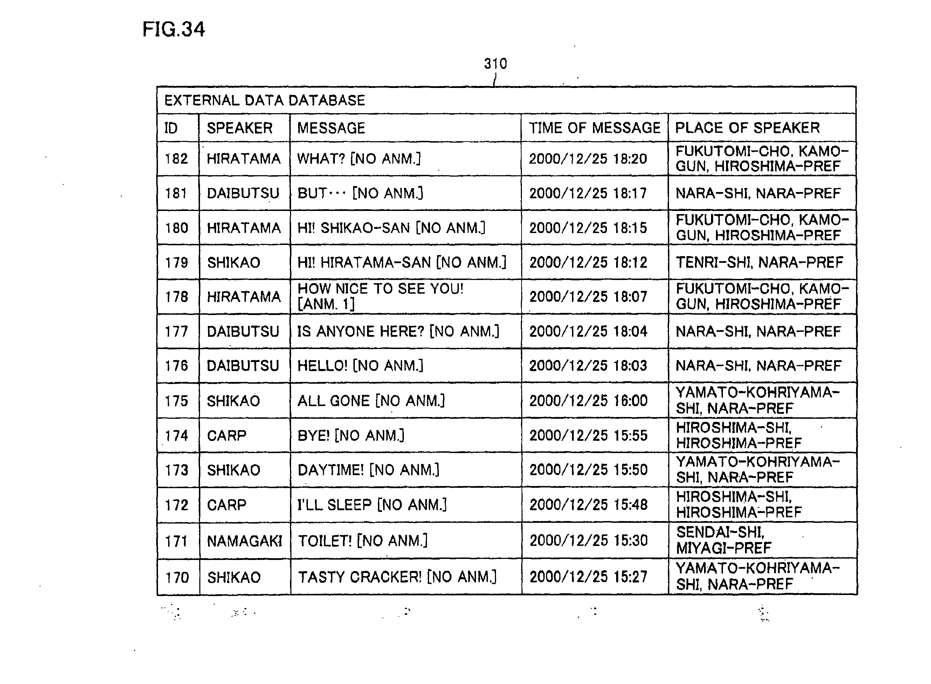

Fig. 34 illustrates a table structure of external data database 310, which differs from that in Fig. 9 in that information representing the animation selected by the speaker is stored together with character strings representing the message. In Fig. 34, the data corresponding to Fig. 32 is indicated by the ID attribute of "178", which represents that the speaker is "HIRATAMA", contents of the messages are "HOW NICE TO SEE YOU!", the selected animation is "Anm. 1", the time of message is "2000/12/25 18:07", and the place of speaker is "FUKUTOMI-CHO, KAMO-GUN, HIROSHIMA-PREF".

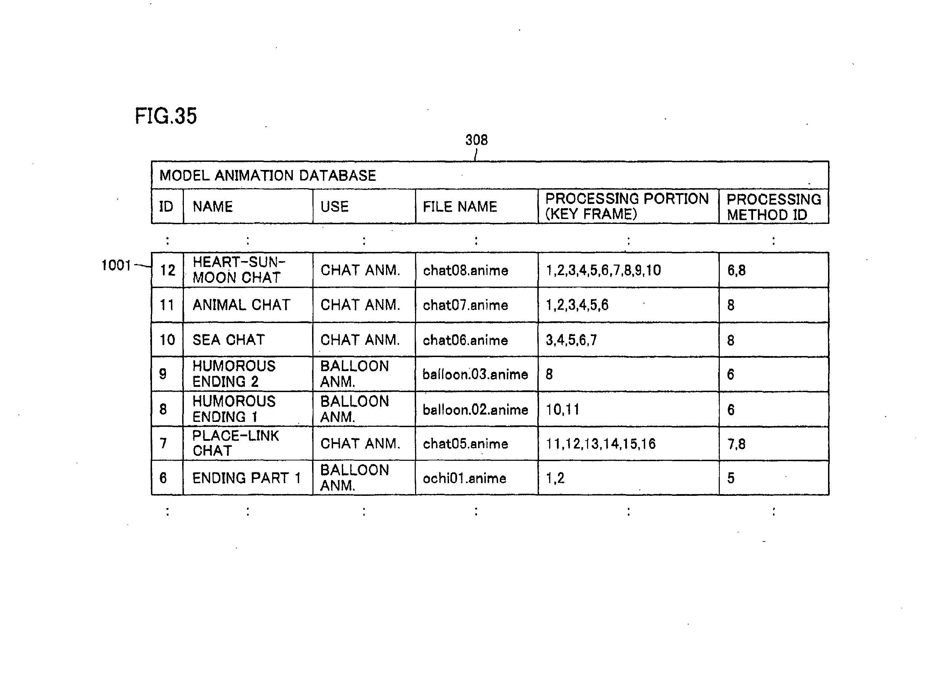

Fig. 35 illustrates a table structure of model animation database 308, which differs from that in Fig. 10 in that the processing method of the model animation "HEART-SUN-MOON CHAT" indicated by the ID of "12" is represented by "6, 8". In this case, the processing method includes "animation replacement" and "character string replacement", and the animation replacement and the character string replacement are performed with reference to the table of external data database 310 shown in Fig. 31.

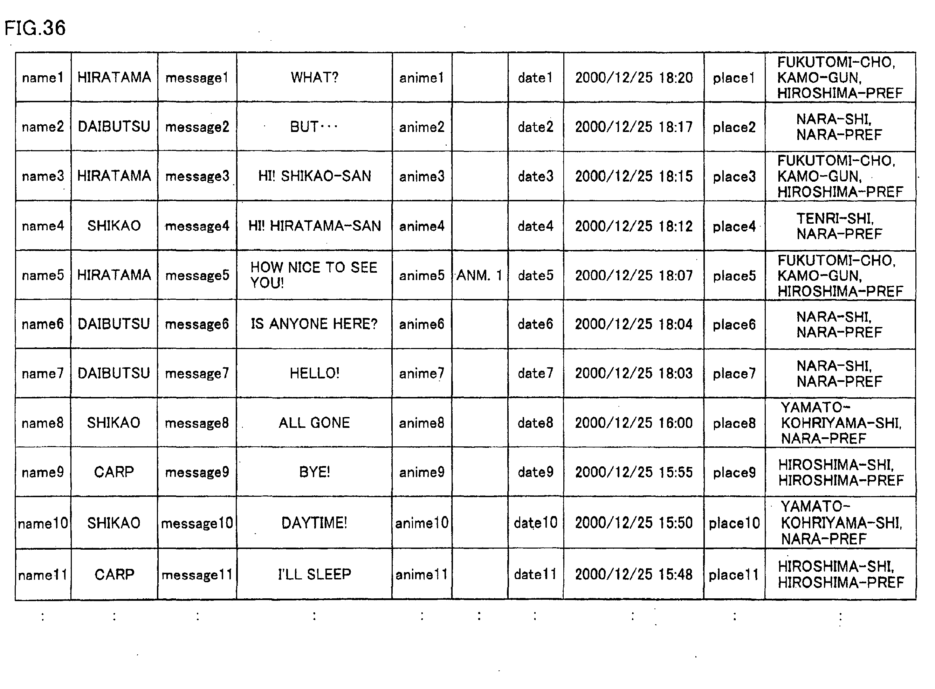

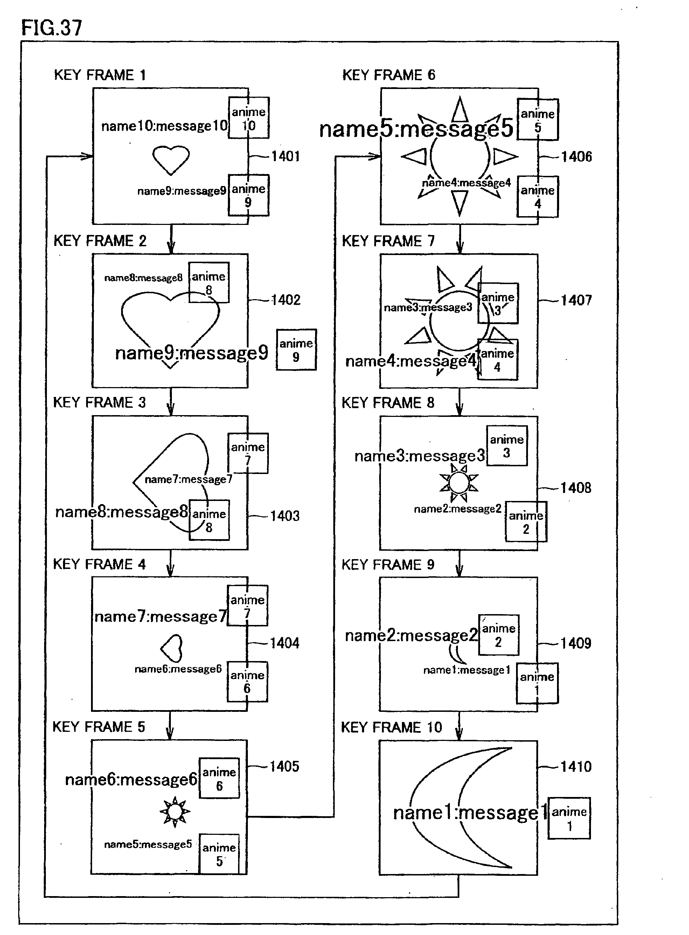

Fig. 37 shows images of the model animation. When the data in Fig. 32 is sent, the character strings "HIRATAMA" and "HOW NICE TO SEE YOU!" correspond to tags of "name5" and "message5" as illustrated in Fig. 36, respectively, and the animation "Anm. 1" corresponds to the tag of "anime5" so that these data are replaced with a key frame 6 in Fig. 37 for display. In the example of Fig. 37, the animation, which is output as the external data, is formed of only the animation "anime5" so that tags other than "anime5" are not replaced. In connection with this, it is assumed that the model animation contains, in advance, blank animation data representing that nothing is to be displayed.

From the above manners, the speaker joining the animation chat can display the animation together with the message as shown in Fig. 33.

### [Fourth Embodiment]

A fourth embodiment differs from the first embodiment primarily in that the system of the first embodiment produces the animation by transmitting the data between mobile terminal 104 and server 102, but the system of the fourth embodiment can produce the animation only by mobile terminal 104. Thus, mobile terminal 104 holds the model animation to be used for producing the animation, determines the processing portion and the processing method for processing the model animation, and thereby produces the new animation.

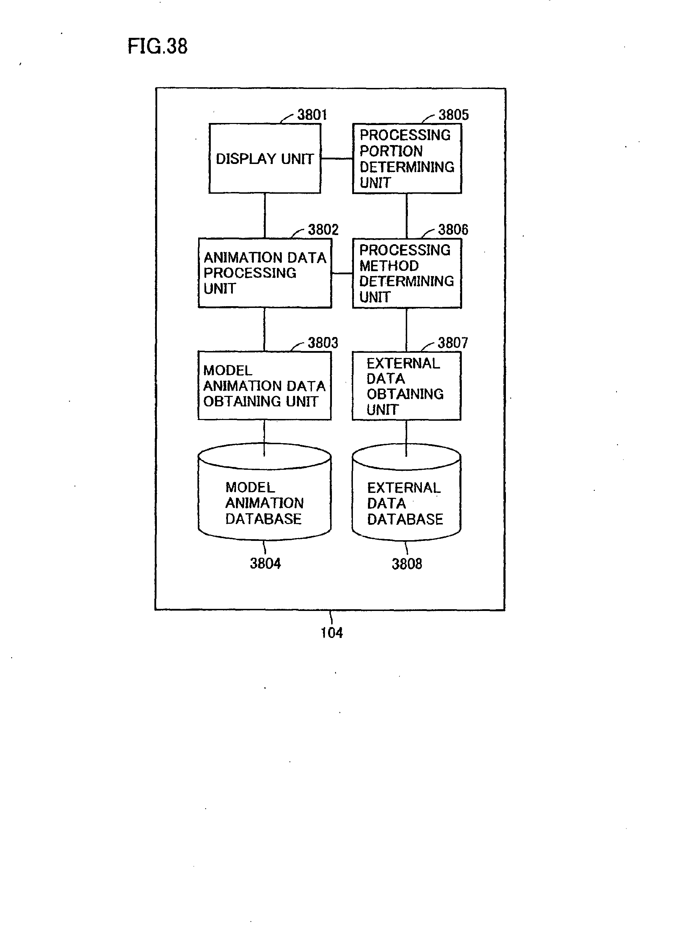

Fig. 38 is a functional block diagram of mobile terminal 104 according to the fourth embodiment. A display unit 3801 displays the produced animation. An animation data processing unit 3802 processes the model animation based on the external data to produce new animation. A model animation data obtaining unit 3803 obtains the intended model animation from the plurality of models of animation stored in a model animation database 3804. A processing portion determining unit 3805 determines the processing portion of the animation. A processing method determining unit 3806 determines the processing method of the animation. An external data obtaining unit 3807 obtains intended external data from the plurality of external data stored in the external data database. The functions of the respective portions are the same as those of the first embodiment, and therefore description thereof is not repeated.

According to the above structure, mobile terminal 104 can perform the processing within the mobile terminal to produce the animation without establishing communication with server 102.

By using the mobile terminal according to this embodiment, a memo may be entered in mobile terminal 104, and processing of combining contents of the memo with animation may be performed within mobile terminal 104 so that animation can be produced on a memorandum. If it is not necessary to use the data stored in server 102 for producing animation, intended animation can be produced without accessing server 102 so that a communication cost can be eliminated.

### [Fifth Embodiment]

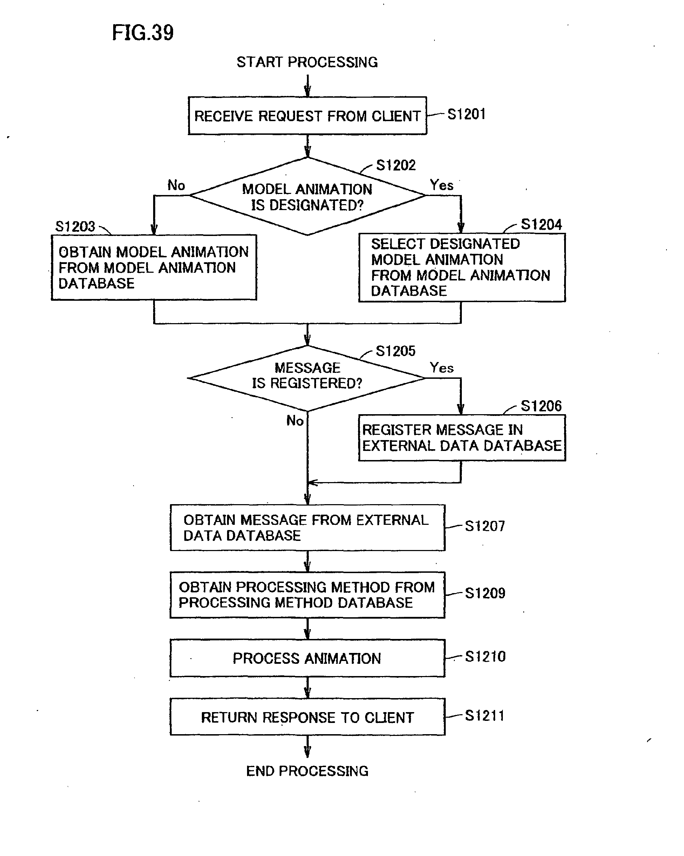

Fig. 39 is a flowchart illustrating a flow of an animation data producing method, in which the processing is performed regardless of the format of the external data used for processing the model animation.

The flowchart in Fig. 39 differs from the processing flow illustrated in Fig. 12 in that step S1208 of analyzing the obtained external data is eliminated.

In the case where the format of the model animation data obtained in step S1203 or S1204 as well as the processing method of the model animation are determined in advance, and the format of the external data to be used for the processing is ignored, step S1209 of obtaining the processing method from the processing method database does not require the results obtained by analyzing the external data database in step S1208. Therefore, the step 1208 is eliminated.

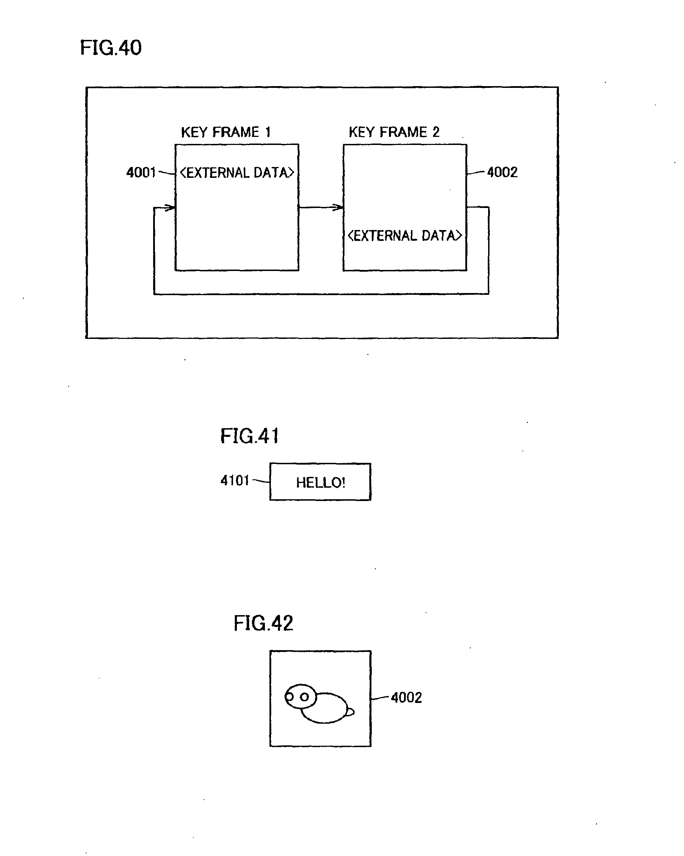

Fig. 40 is an example of the model animation data used in this embodiment. The data is formed of two key Frames 4001 and 4002, each including a tag of <EXTERNAL DATA>. The portion bearing the tag of <EXTERNAL DATA> is to be replaced with the external data, and it is determined in advance that the processing portion of the model animation data to be processed bears the tag of <EXTERNAL DATA>.

Figs. 41 and 42 represent examples of the external data. Fig. 41 shows the case where the external data is text, and Fig. 42 shows the case where the external data is animation data.

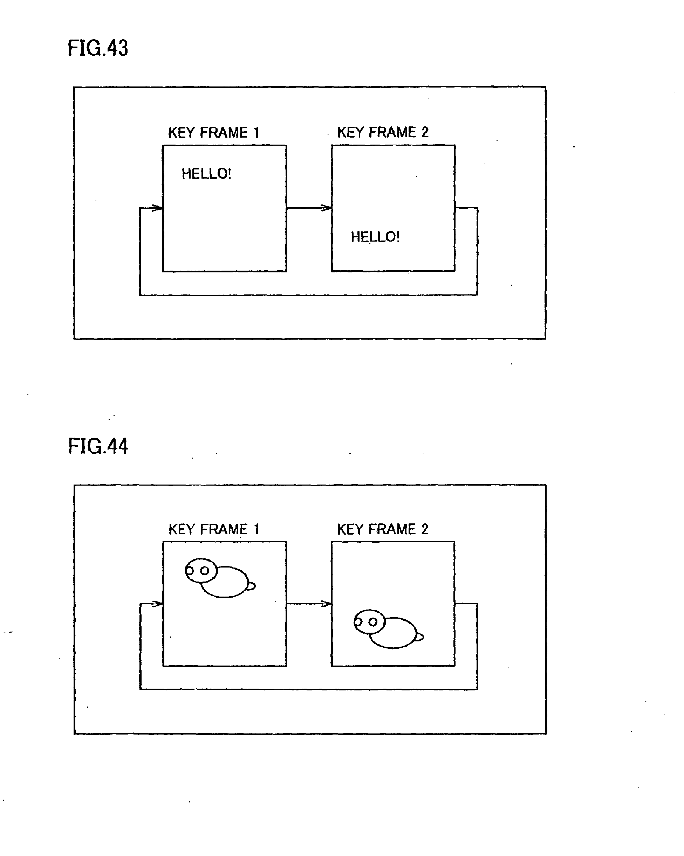

In this embodiment, the processing is performed regardless of the kind of external data so that the results of processing take the forms shown in Figs. 43 and 44, respectively. In Fig. 43, the portion of the tag of <EXTERNAL DATA> in the model animation is processed with text data of "HELLO!". In Fig. 44, the portion of the tag of <EXTERNAL DATA> in the model animation is processed with the animation data shown in Fig. 42.

According to the invention, as described above, the animation data can be produced only by providing the external data to be used for the processing, and the user is not required to use software dedicated to production of the animation data.

The processing in the first to fifth embodiments described above may be partially or entirely provided as a program(s) formed of a series of orders, which bear sequence numbers and are suitable to processing by a computer. For installing, executing and distributing such programs, computer-readable record mediums bearing the programs may be provided. Although not particularly restricted, the record medium may be a CD-ROM (Compact Disc-Read Only Memory) or a DVD-ROM (Digital Versatile Disc-Read Only Memory), which bears the above program and can be read by a drive of a server computer, or may be a memory card, which bears the above program and can be attached to a terminal device of a client.

Although the present invention has been described and illustrated in detail, it is clearly understood that the same is by way of illustration and example only and is not to be taken by way of limitation, the spirit and scope of the present invention being limited only by the terms of the appended claims.

## Claims

1. An animation data producing method of processing a portion of first animation data with different data to produce second animation data, comprising the steps of:
extracting element data included in said different data;
determining a key frame to be processed among a plurality of key frames included in the first animation data; and
processing a portion of said determined key frame based on said element data to produce the second animation data.

2. The animation data producing method according to claim 1, wherein
said step of determining the key frame to be processed among the plurality of key frames included in said first animation data is performed to determine the key frame to be processed based on said extracted data.

3. The animation data producing method according to claim 1, further comprising the step of:
receiving external data as said different data, wherein
said element data and each of said key frames of said first animation data include tags for determining processing portions, respectively, and
when a match occurs between the tags, real data corresponding to the tag of the key frame of the first animation data is processed with real data corresponding to the tag of said element data to produce the second animation data.

4. The animation data producing method according to claim 1, further comprising the step of:
registering said received external data in time sequence, wherein
said plurality of key frames included in said first animation data are successively processed based on said external data registered in time sequence to produce the second animation data.

5. The animation data producing method according to claim 1, further comprising the step of:
analyzing a method of processing said element data based on a kind of said element data, wherein
said second animation data is produced based on said processing method.

6. The animation data producing method according to claim 1, further comprising the step of:
selecting said first animation data from a plurality of preregistered animation data based on a result of meaning analysis of the message contents included in said element data.

7. An animation data producing method for use in a chat system producing second animation data based on first animation data and external data sent from one or a plurality of terminal devices, and displaying the produced second animation data on said terminal device, comprising the steps of:
receiving said external data including data for determining a processing portion of said first animation data and data representing message contents;
determining a key frame to be processed among a plurality of key frames included in said first animation data based on the data for determining said processing portion;
producing the second animation data by processing a portion of said determined key frame with the data representing said message contents; and
displaying the second animation data including said message contents on said terminal device.

8. The animation data producing method according to claim 7, further comprising the steps of:
storing said external data together with time information upon every reception of said external data; and
extracting said stored external data corresponding to a time range when said external data includes data specifying said time range, wherein
new animation is produced based on said extracted external data.

9. The animation data producing method according to claim 7, wherein:
said external data includes data determining a place;
said animation data producing method further comprises the steps of:
storing said external data upon every reception of said external data, and
extracting said stored external data corresponding to said place when said external data includes the data specifying the place; and
new animation is produced based on said extracted external data.

10. The animation data producing method according to claim 7, wherein:
said external data includes data for specifying a speaker;
said animation data producing method further comprises the steps of:
storing said external data upon every reception of said external data, and
extracting said stored external data corresponding to said speaker when said external data includes the data specifying the speaker; and
new animation is produced based on said extracted external data.

11. The animation data producing method according to claim 1, wherein
said external data includes data for determining a kind of said first animation data, and the data for determining the kind of said first animation data is managed independently of the data representing said contents of the message.

12. An animation data producing method for use in a chat system producing second animation data based on first animation data and external data sent from one or a plurality of terminal devices, and displaying the produced second animation data on said terminal device, comprising the steps of:
sending said external data including data for determining a processing portion of said first animation data and data representing message contents; and
determining a key frame to be processed among a plurality of key frames included in said first animation data based on the data for determining said processing portion, processing a portion of said determined key frame with the data representing said message contents, and displaying the second animation data including said message contents produced by the processing.

13. An animation data producing device (102) for producing second animation data by processing a portion of first animation data with different data, comprising:
means (307) for extracting element data included in said different data;
means (302) for determining a key frame to be processed among a plurality of key frames included in the first animation data based on said extracted element data; and
means (301) for producing the second animation data by processing a portion of the determined key frame based on said element data.

14. An animation data producing device (102) for use in a system for producing second animation data based on first animation data and external data sent from one or a plurality of terminal devices, and displaying the produced second animation data on said terminal device, comprising:
means (312) for receiving said external data including data for determining a processing portion of said first animation and data representing message contents;
means (302) for determining a key frame to be processed among a plurality of key frames included in said first animation data based on the data for determining said processing portion;
means (301) for producing the second animation data by processing a portion of said determined key frame with the data representing said message contents; and
means (311) for displaying the second animation data including said message contents on said terminal device.

15. A terminal device (104) for use in a system for producing second animation data based on first animation data and external data sent from one or a plurality of terminal devices, and displaying the produced second animation data on said terminal device, comprising:
means (S801) for sending said external data including data for determining a processing portion of said first animation data and data representing message contents; and
means (201, S803) for determining a key frame to be processed among a plurality of key frames included in said first animation data based on the data for determining said processing portion, processing a portion of said determined key frame with the data representing said message contents and displaying the second animation data including said message contents produced by the processing.

16. A terminal device (104) for use in a system for producing second animation data based on first animation data and external data sent from one or a plurality of terminal devices, and displaying the produced second animation data on said terminal device, comprising:
means (1707) for sending said external data including data for determining a processing portion of said first animation data and data representing message contents;
means (1701) for determining a key frame to be processed among a plurality of key frames included in said first animation data based on the data for determining said processing portion, and receiving data representing a processing portion of the determined key frame and data representing a manner of processing the processing portion;
means (1702) for producing second animation data based on said received data representing the processing portion, said received data representing the processing manner and the prestored first animation data; and
means (201, S1806) for displaying the second animation data including said message contents.

17. A computer-readable record medium bearing an animation data producing program for executing by a computer an animation data producing method of producing second animation data by processing a portion of first animation data with different data, wherein said animation data producing program includes the steps of:
extracting element data included in said different data;
determining a key frame to be processed among a plurality of key frames included in the first animation data; and
processing a portion of said determined key frame based on said element data to produce the second animation data.

18. A computer-readable record medium bearing an animation data producing program for executing by a computer an animation data producing method for use in a chat system producing second animation data based on first animation data and external data sent from one or a plurality of terminal devices, and displaying the produced second animation data on said terminal device, wherein said animation data producing program includes the steps of:
receiving said external data including data for determining a processing portion of said first animation data and data representing message contents;
determining a key frame to be processed among a plurality of key frames included in said first animation data based on the data for determining said processing portion;
producing the second animation data by processing a portion of said determined key frame with the data representing said message contents; and
displaying the second animation data including said message contents on said terminal device.

19. A computer-readable record medium bearing an animation data producing program for executing by a computer an animation data producing method for use in a chat system producing second animation data based on first animation data and external data sent from one or a plurality of terminal devices, and displaying the produced second animation data on said terminal device, wherein said animation data producing program includes the steps of:
sending said external data inducting data for determining a processing portion of said first animation data and data representing message contents; and
determining a key frame to be processed among a plurality of key frames included in said first animation data based on the data for determining said processing portion, processing a portion of said determined key frame with the data representing said message contents, and displaying the second animation data including said message contents produced by the processing.

20. An animation data producing program for executing by a computer an animation data producing method of producing second animation data by processing a portion of first animation data with different data, including the steps of:
extracting element data included in said different data;
determining a key frame to be processed among a plurality of key frames included in the first animation data; and
processing a portion of said determined key frame based on said element data to produce the second animation data.

21. An animation data producing program for executing by a computer an animation data producing method for use in a chat system producing second animation data based on first animation data and external data sent from one or a plurality of terminal devices, and displaying the produced second animation data on said terminal device, including the steps of:
receiving said external data including data for determining a processing portion of said first animation data and data representing message contents;
determining a key frame to be processed among a plurality of key frames included in said first animation data based on the data for determining said processing portion;
producing the second animation data by processing a portion of said determined key frame with the data representing said message contents; and
displaying the second animation data including said message contents on said terminal device.

22. An animation data producing program for executing by a computer an animation data producing method for use in a chat system producing second animation data based on first animation data and external data sent from one or a plurality of terminal devices, and displaying the produced second animation data on said terminal device, including the steps of:
sending said external data including data for determining a processing portion of said first animation data and data representing message contents; and
determining a key frame to be processed among a plurality of key frames included in said first animation data based on the data for determining said processing portion, processing a portion of said determined key frame with the data representing said message contents, and displaying the second animation data including said message contents produced by the processing.
